(19) Europäisches Patentamt / European Patent Office / Office européen des brevets

(11) **EP 4 084 279 A1**

(12) **EUROPEAN PATENT APPLICATION**
published in accordance with Art. 153(4) EPC

(43) Date of publication:
**02.11.2022 Bulletin 2022/44**

(21) Application number: **20908278.3**

(22) Date of filing: **07.12.2020**

(51) International Patent Classification (IPC):
**H02J 13/00** (2006.01)  **H02J 7/35** (2006.01)
**H02J 3/32** (2006.01)  **H02J 3/38** (2006.01)
**H02J 3/46** (2006.01)

(52) Cooperative Patent Classification (CPC):
**H02J 3/32; H02J 3/38; H02J 3/46; H02J 7/35;
H02J 13/00;** Y02E 40/70; Y02E 60/00; Y04S 10/12;
Y04S 10/123; Y04S 10/14

(86) International application number:
**PCT/JP2020/045467**

(87) International publication number:
**WO 2021/131638 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2019 JP 2019231731**

(71) Applicant: **NEC Corporation
108-8001 Tokyo (JP)**

(72) Inventor: **KUDO, Koji
Tokyo 108-8001 (JP)**

(74) Representative: **Betten & Resch
Patent- und Rechtsanwälte PartGmbB
Maximiliansplatz 14
80333 München (DE)**

(54) **SERVICE MANAGEMENT DEVICE, POWER CONDITIONING SYSTEM, DISTRIBUTED POWER SOURCE SYSTEM, POWER CONTROL SYSTEM, SERVICE MANAGEMENT METHOD, AND RECORDING MEDIUM**

(57)    A service management device is provided with a classification processing means that classifies and calculates, for each of a plurality of power supply apparatuses, details of input/output power in a service carried out using at least one of the power supply apparatuses; and a service recording means that records, for each classification performed by the classification processing means, details of an amount of power input/output as a result of execution of the service.

FIG. 3

**Description**

TECHNICAL FIELD

The present invention relates to a service management device, a power conditioning system, a distributed power supply system, a power control system, a service management method, and a recording medium.

BACKGROUND ART

Patent Document 1 describes a multipurpose control device for using a single storage battery for a plurality of applications. This multipurpose control device multiplies a control command value for each application by a proportional coefficient in order to determine the output command value within the rated output of the power conditioner for battery.

Prior Art Document

Patent Document

Patent Document 1: Japanese Unexamined Patent Application, First Publication No.2014-236600

SUMMARY

Problems to be solved by the Invention

Among services related to the supply and demand of power are services such as green power, represented by photovoltaic power generation and wind power generation, in which added value is recognized in the attribute of the power. When using power with different attributes for a service, there is a need to show the correspondence relation of which power is provided to the service in order to utilize the added value of the attribute.
An example object of the present invention is to provide a service management device, a power conditioning system, a distributed power supply system, a power control system, a service management method, and a recording medium capable of solving the aforementioned problem.

Means for Solving the Problems

According to the first example aspect of the present invention, a service management device is provided with: a classification processing means that classifies and calculates, for each of a plurality of power supply apparatuses, details of input/output power in a service carried out using at least one of the power supply apparatuses; and a service recording means that records, for each classification performed by the classification processing means, details of an amount of power input/output as a result of execution of the service.
According to the second example aspect of the present invention, a distributed power supply system is provided with: a plurality of power supply apparatuses; an input/output power determination means that determines input/output power for each of the power supply apparatuses on the basis of input/output power of a service carried out using at least one of the power supply apparatuses; an apparatus control means that controls the power supply apparatuses in accordance with the input/output power determined for each of the power supply apparatuses; a classification processing means that classifies and calculates, for each of the power supply apparatuses, details of the input/output power in the service; and a service recording means that records, for each classification performed by the classification processing means, details of an amount of power input/output as a result of execution of the service.
According to the third example aspect of the present invention, a power control system is provided with: a host control device that determines an amount of input/output power required in a service; a plurality of power supply apparatuses; an input/output power determination means that determines input/output power for each of the power supply apparatuses on the basis of the amount of the input/output power required in the service; an apparatus control means that controls the power supply apparatuses in accordance with the input/output power determined for each of the power supply apparatuses; a classification processing means that classifies and calculates, for each of the power supply apparatuses, details of the input/output power in the service; and a service recording means that records, for each classification performed by the classification processing means, details of an amount of power input/output as a result of execution of the service.
According to the fourth example aspect of the present invention, a service management method includes: classifying and calculating, for each of a plurality of power supply apparatuses, details of input/output power in a service carried out using at least one of the power supply apparatuses; and recording, for each classification, details of an amount of power input/output as a result of execution of the service.

According to the fifth aspect of the present invention, a recording medium records a program for causing a computer to execute: classifying and calculating, for each of a plurality of power supply apparatuses, details of input/output power in a service carried out using at least one of the power supply apparatuses; and recording, for each classification, details of an amount of power input/output as a result of execution of the service.

Example Advantageous Effects of Invention

According to this invention, it is possible to show the correspondence relation of which power supply apparatus was used to provide which power to a service.

BRIEF DESCRIPTION OF DRAWINGS

FIG. 1 is a diagram showing a configuration of a power control system according to the first example embodiment.
FIG. 2 is a diagram showing an example of a configuration in which a power conditioning system according to the first example embodiment performs power conversion.
FIG. 3 is a diagram showing an example of a functional configuration of the power conditioning system according to the first example embodiment.
FIG. 4 is a diagram showing an example of a configuration in which the power conditioning system according to the first example embodiment calculates an input/output power command value.
FIG. 5 is a diagram showing a first example of the input/output power allocation calculation of a power supply apparatus by a classification processing unit according to the first example embodiment.
FIG. 6 is a diagram showing a second example of the input/output power allocation calculation of a power supply apparatus by a classification processing unit according to the first example embodiment.
FIG. 7 is a diagram showing a third example of the input/output power allocation calculation of a power supply apparatus by a classification processing unit according to the first example embodiment.
FIG. 8 is a diagram showing a fourth example of the input/output power allocation calculation of a power supply apparatus by a classification processing unit according to the first example embodiment.
FIG. 9 is a diagram showing a fifth example of the input/output power allocation calculation of a power supply apparatus by a classification processing unit according to the first example embodiment.
FIG. 10 is a flowchart showing an example of a processing procedure performed by the power conditioning system according to the first example embodiment.
FIG. 11 is a flowchart showing a first example of a processing procedure in which the classification processing unit according to the first example embodiment calculates the details of the service execution amount.
FIG. 12 is a flowchart showing a second example of a processing procedure in which the classification processing unit according to the first example embodiment calculates the details of the service execution amount.
FIG. 13 is a diagram showing an example of a processing procedure in which the classification processing unit and a service recording unit according to the first example embodiment calculate and record the details of the execution amount of each service.
FIG. 14 is a flowchart showing an example of a processing procedure in which a power storage information processing unit according to the first example embodiment calculates the stored power amount for each power attribute of a power supply apparatus that can be charged and discharged.
FIG. 15 is a diagram showing an example of a first mode of installation of a DC distribution network in the power control system according to the second example embodiment.
FIG. 16 is a diagram showing an example of a second mode of installation of a DC distribution network in the power control system according to the second example embodiment.
FIG. 17 is a diagram showing an example of a third mode of installation of a DC distribution network in the power control system according to the second example embodiment.
FIG. 18 is a diagram showing a configuration example of an information path in the power control system according to the second example embodiment.
FIG. 19 is a diagram showing a first example of power exchange via a DC distribution network according to the second example embodiment.
FIG. 20 is a diagram showing a second example of power exchange via a DC distribution network according to the second example embodiment.
FIG. 21 is a diagram showing a third example of power exchange via a DC distribution network according to the second example embodiment.

FIG. 22 is a diagram showing a fourth example of power exchange via a DC distribution network according to the second example embodiment.

FIG. 23 is a diagram showing a fifth example of power exchange via a DC distribution network according to the second example embodiment.

FIG. 24 is a diagram showing an example of a configuration of a service management device according to the third example embodiment.

FIG. 25 is a diagram showing an example of a configuration of a distributed power supply system according to the fourth example embodiment.

FIG. 26 is a diagram showing an example of a configuration of the power control system according to the fifth example embodiment.

FIG. 27 is a flowchart showing an example of a processing procedure in the service management method according to the sixth example embodiment.

FIG. 28 is a schematic block diagram showing a configuration of a computer according to at least one example embodiment.

EXAMPLE EMBODIMENT

Hereinbelow, example embodiments of the present invention will be described, but the following example embodiments do not limit the invention according to the claims. Also, not all combinations of features described in the example embodiments are essential to the means for solving the invention.

<First Example Embodiment>

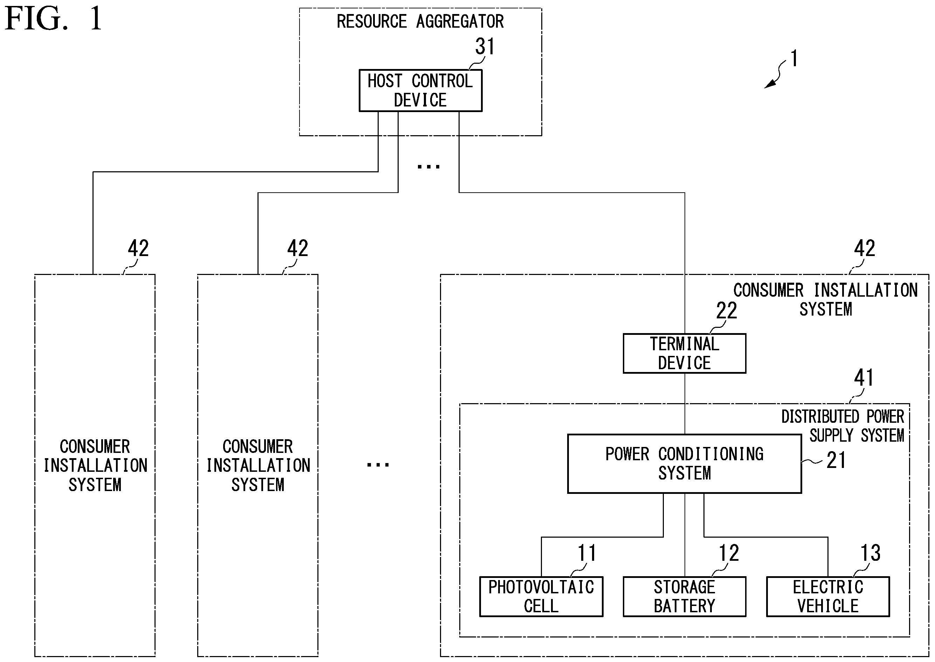

FIG. 1 is a diagram showing a configuration of a power control system according to the first example embodiment. In the configuration shown in FIG. 1, the power control system 1 is provided with a photovoltaic (PV) cell 11, a storage battery 12, an electric vehicle (EV) 13, a power conditioning system (PCS) 21, a terminal device 22 and a host control device 31.

The photovoltaic cell 11 generates electricity using sunlight and outputs the generated power.

The storage battery 12 charges and discharges in accordance with the control of the power conditioning system 21.

The electric vehicle 13 is equipped with a storage battery and runs on the electric energy stored in the storage battery. The electric vehicle 13 is used as a charging/discharging facility including a storage battery when not used as a vehicle, and charges/discharges in accordance with the control of the power conditioning system 21.

The photovoltaic cell 11, the storage battery 12, and the electric vehicle 13 correspond to examples of power supply apparatuses. The power supply apparatus referred to here is an apparatus capable of outputting power. Further, the storage battery 12 and the electric vehicle 13 correspond to examples of rechargeable power apparatuses.

The power conditioning system 21 controls the charging and discharging of each of the storage battery 12 and the electric vehicle 13. Specifically, the power conditioning system 21 determines the input/output power of each of the storage battery 12 and the electric vehicle 13, and controls each of the storage battery 12 and the electric vehicle 13 so as to charge/discharge with the determined input/output power. The power conditioning system 21 also controls the power generation of the photovoltaic cell 11. Specifically, the power conditioning system 21 determines the output power of the photovoltaic cell 11 and controls the photovoltaic cell 11 so as to generate power with the determined output power. In particular, the power conditioning system 21 controls the photovoltaic cell 11 so as to output the power corresponding to the command value when the outputable power of the photovoltaic cell 11 exceeds the command value.

Further, the power conditioning system 21 allocates the input/output power for each power supply apparatus to the input/output power for each service, and records the details of the amount of input/output power based on the input/output power for each service and each power supply apparatus. The service referred to here is the execution of a certain objective by adjustment of the power or the amount of power.

According to the power conditioning system 21, it is possible to calculate the consideration in accordance with the power supply apparatus, such as for example applying the green power tariff system to the consideration for selling green power generated by the photovoltaic cell 11.

The power conditioning system 21 corresponds to an example of a service management device. However, the service management device may be configured as part of the power conditioning system or as an external device to the power conditioning system.

The number of services executed by the power conditioning system 21 may be one or more, and is not limited to a specific number.

The power conditioning system 21 and the power supply apparatus connected to the power conditioning system 21 are collectively referred to as a distributed power supply (DPS) system 41. In the case of the configuration example of a consumer installation system 42 shown in FIG. 1, the power conditioning system 21, the photovoltaic cell 11, the storage battery 12, and the electric vehicle 13 are collectively referred to as the distributed power supply system 41.

The distributed power supply system 41 provides energy management services to consumers. The consumer here refers to a consumer of power. Energy management services are also called consumer-oriented services.

Examples of energy management services provided by the distributed power supply system 41 to consumers include, but are not limited to, peak shift, peak shaving, and power selling.

Peak shift is a service that keeps down the electricity tariff by charging the storage battery during the period of time when the electricity tariff is relatively low and covering the power consumption of apparatuses (discharging the storage battery) during the period of time when the electricity tariff is relatively high.

Peak shaving is a service that sets a threshold power and cuts peak demand by discharging the storage battery when power consumption exceeding the threshold power occurs. For example, when the electricity tariff is set in stages in accordance with the maximum power, the electricity tariff can be suppressed by reducing the maximum power by means of peak shaving.

Power selling is a service that provides power (reverse power flow) from the consumer side to the commercial power system. Consumers get paid for the amount of power they provide.

In the following, an example will be described in which a higher price is paid for the sale of green power than the sale of power other than green power. Green power is power generated by natural energy such as wind power, sunlight, and biomass (power derived from renewable energy). In the configuration of FIG. 1, the generated power of the photovoltaic cell 11 corresponds to the example of green power.

Further, in the following, a case where the storage battery 12 or the electric vehicle 13 discharges power charged with green power is treated as green power will be described as an example.

Power other than green power is also called normal power. Green power and normal power correspond to the examples of power attributes in accordance with the power generation scheme, respectively. A power attribute due to the generation scheme is also simply referred to as the power attribute or just the attribute.

Further, the distributed power supply system 41 adjusts the power supply and demand for a system-oriented service in response to a request from the host control device 31. The resource aggregator (RA) using the host control device 31 aggregates the power supply and demand adjustment by each consumer and provides an ancillary service (coordination power service) to the power transmission and distribution business operator. A resource aggregator is a business operator that provides services by integrating and controlling the power facility (distributed power supply system 41) on the consumer side.

Ancillary services are also called system-oriented services.

Examples of ancillary services provided by resource aggregators to power transmission and distribution business operators include load frequency control (LFC), $\Delta f$ control, and demand response, but ancillary services are not limited thereto. Demand response is defined as changing the power consumption patterns to ensure that the consumer side appropriately controls the use of power (suppresses or conversely increases the use of power) depending on the setting of electricity tariff prices or the payment of incentives, for example, when the wholesale power market price rises or falls, or when the system reliability declines.

Both LFC and $\Delta f$ control are controls for adjusting the system frequency to the reference frequency. Comparing LFC and $\Delta f$ control, LFC may have a relatively long cycle and a relatively slow response speed, such that, for example, LFC charges and discharges in cycles of several seconds, while $\Delta f$ control charges and discharges in a cycle of about a second or less.

The services executed by the distributed power supply system 41 are not limited to specific services. It is sufficient that the distributed power supply system 41 is capable of simultaneously executing a plurality of services having different evaluations with respect to power attributes. Furthermore, the distributed power supply system 41 does not necessarily have to be able to execute both energy management services and ancillary services at the same time. For example, the distributed power supply system 41 may be able to execute power sales and peak shifts at the same time. In this case, the distributed power supply system 41 does not necessarily have to be able to further execute ancillary services at the same time as these energy management services.

The number of power supply apparatuses included in one distributed power supply system 41 is not limited to three, and may be a plurality. Further, the types of power supply apparatuses included in the distributed power supply system 41 are not limited to photovoltaic cells, storage batteries, and electric vehicles. It is sufficient that the power supply apparatuses included in one distributed power supply system 41 are capable of outputting power having different attributes such as green power and normal power.

The terminal device 22 is used as a user terminal of the distributed power supply system 41, and accepts user operations such as service setting operations performed by the distributed power supply system 41. Further, the terminal device 22 may calculate the charge/discharge power in some services. For example, the terminal device 22 may calculate the charge/discharge power in a service with a relatively slow response such as LFC. Since the terminal device 22 calculates the charge/discharge power in some services, the load for the power conditioning system 21 to calculate the charge/discharge power becomes relatively light, and in this respect, the responsiveness of the distributed power supply system 41 can be ensured.

The terminal device 22, the power conditioning system 21, the photovoltaic cell 11, the storage battery 12, and the electric vehicle 13 are collectively denoted as a consumer installation system 42. The consumer installation system 42 is provided as a facility used by consumers.

However, the terminal device 22 may be owned by the resource aggregator or by the consumer. For example, the resource aggregator may lend the terminal device 22 to the consumer.

The power conditioning system 21, the photovoltaic cell 11, the storage battery 12, and the electric vehicle 13 are owned by, for example, the consumer.

The host control device 31 requests the power conditioning system 21 to adjust the power supply and demand. As described above, the resource aggregator using the host control device 31 aggregates power supply and demand adjustments by respective consumers and provides an ancillary service to the power transmission and distribution business operator.

The host control device 31 determines the amount of input/output power required for each consumer on the basis of the input/output power of the service provided to the power transmission and distribution business operator. Then, the host control device 31 transmits the required amount that has been determined to the power conditioning system 21 and/or the terminal device 22 of each consumer.

The power control system 1 may include other systems for inputting/outputting power in addition to the consumer installation system 42. In particular, the power control system 1 may include, in addition to the consumer installation system 42, a system including only one power supply apparatus such as a resource aggregator installation system described later. Further, the power control system 1 may include a system such as a mega solar that outputs (transmits) power but does not input (receive) power.

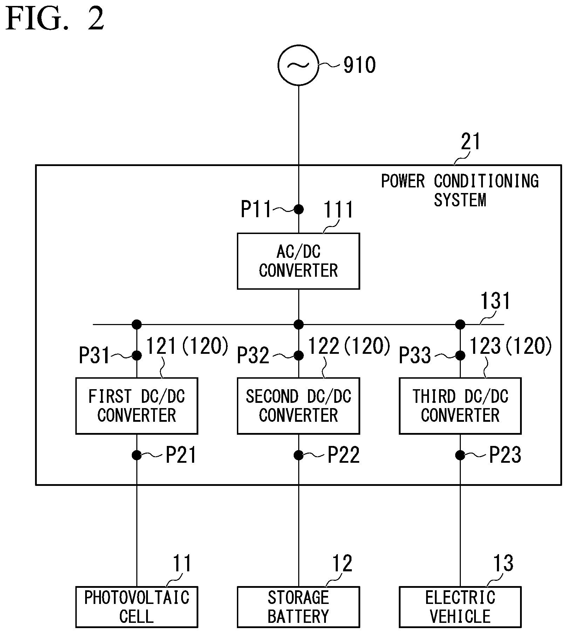

FIG. 2 is a diagram showing an example of a configuration in which the power conditioning system 21 performs power conversion. In the example of FIG. 2, the power conditioning system 21 is provided with an alternating current (AC)/direct current (DC) converter 111, a first DC/DC converter 121, a second DC/DC converter 122, a third DC/DC converter 123, and a DC bus 131.

The AC/DC converter 111 is connected to a power system 910 and the DC bus 131. The side of the AC/DC converter 111 connected to the power system 910 is referred to as the AC end side, while the side connected to the DC bus 131 is referred to as the DC end side.

The first DC/DC converter 121 is connected to the photovoltaic cell 11 and the DC bus 131. The side of the first DC/DC converter 121 connected to the photovoltaic cell 11 is referred to as the outer end side, while the side connected to the DC bus 131 is referred to as the inner end side.

The second DC/DC converter 122 is connected to the storage battery 12 and the DC bus 131. The side of the second DC/DC converter 122 connected to the storage battery 12 is referred to as the outer end side, while the side connected to the DC bus 131 is referred to as the inner end side.

The third DC/DC converter 123 is connected to the electric vehicle 13 and the DC bus 131. The side of the third DC/DC converter 123 connected to the electric vehicle 13 is referred to as the outer end side, while the side connected to the DC bus 131 is referred to as the inner end side.

DC/DC converters such as the first DC/DC converter 121, the second DC/DC converter 122, and the third DC/DC converter 123 are also collectively referred to as a DC/DC converter 120.

Regarding the DC/DC converter 120 included in the power conditioning system 21, the side connected to the power supply apparatus is referred to as an outer end side, while the side connected to the DC bus 131 is referred to as the inner end side.

In such a configuration, the power conditioning system 21 converts the input/output power of the connected power supply apparatuses (photovoltaic cell 11, storage battery 12 and electric vehicle 13) and the power system 910, and performs power exchange between these power supply apparatuses and the power system 910.

The photovoltaic cell 11 outputs generated power to the first DC/DC converter 121, and the first DC/DC converter 121 performs a voltage conversion on the power from the photovoltaic cell 11 to the power of the DC bus voltage and outputs the power to the DC bus 131.

Both the storage battery 12 and the electric vehicle 13 can be charged and discharged, and there are cases where power is output from the power supply apparatus side to the DC bus 131 side and cases where power is output from the DC bus 131 side to the power supply apparatus side.

When charging the storage battery 12, the second DC/DC converter 122 performs a voltage conversion on the power from the DC bus 131 to the power of the rated voltage of the storage battery 12 and outputs the power to the storage battery 12. On the other hand, when the storage battery 12 is discharged, the second DC/DC converter 122 performs a voltage conversion on the power from the storage battery 12 to the power of the DC bus voltage and outputs the power to the DC bus 131.

When charging the electric vehicle 13, the third DC/DC converter 123 performs a voltage conversion on the power from the DC bus 131 to the power of the rated voltage of the electric vehicle 13 and outputs the power to the electric vehicle 13. On the other hand, when the electric vehicle 13 is discharged, the third DC/DC converter 123 performs a voltage conversion on the power from the electric vehicle 13 to the power of the DC bus voltage and outputs the power to the DC bus 131.

Regarding the relationship between the power conditioning system 21 and the power system 910, there are a forward power flow in which power is output from the power system 910 to the power conditioning system 21 and a reverse power flow in which power is output from the power conditioning system 21 to the power system 910. During the forward power flow, the AC/DC converter 111 converts the AC power from the power system 910 into the DC power of the DC bus voltage (AC/DC conversion and voltage conversion) and outputs the DC power to the DC bus 131. During the reverse power flow, the AC/DC converter 111 converts the power from the DC bus 131 into the AC power of the system voltage (DC/AC conversion and voltage conversion) and outputs the AC power to the power system 910.

The power on the AC end side of the AC/DC converter 111 is referred to as "P11". Accordingly, P11 indicates the input/output power between the power conditioning system 21 and the power system 910. The input/output power between the power conditioning system 21 and the power system 910 is also referred to as the input/output power of the power system 910 or the total input/output power.

Further, the power on the outer end side of the first DC/DC converter 121 is referred to as "P21". Therefore, P21 indicates the output power of the photovoltaic cell 11.

The power on the outer end side of the second DC/DC converter 122 is referred to as "P22". Therefore, P22 indicates the input/output power (charge/discharge power) of the storage battery 12.

The power on the outer end side of the third DC/DC converter 123 is referred to as "P23". Therefore, P23 indicates the input/output power (charge/discharge power) of the electric vehicle 13.

Further, the power on the inner end side of the first DC/DC converter 121 is referred to as P31. The power on the inner end side of the second DC/DC converter 122 is referred to as P32. The power on the inner end side of the third DC/DC converter 123 is referred to as P33.

The power on the DC end side of the AC/DC converter 111 is indicated by addition/subtraction of P31, P32, and P33. For example, when both the storage battery 12 and the electric vehicle 13 are discharged, the power on the DC end side of the AC/DC converter 111 is expressed as P31 + P32 + P33.

The power system 910 is a power system including a consumer's power system and a commercial power system. The AC end side of the AC/DC converter 111 is connected to the consumer's power system, and the consumer's power system and the commercial power system are connected at a receiving point to exchange electricity. Accordingly, whether the distributed power supply system 41 provides a service for a consumer's power system such as peak shift or provides a service for a commercial power system such as an ancillary service, the AC end side of the AC/DC converter 111 performs input/output of power from/to the power system 910.

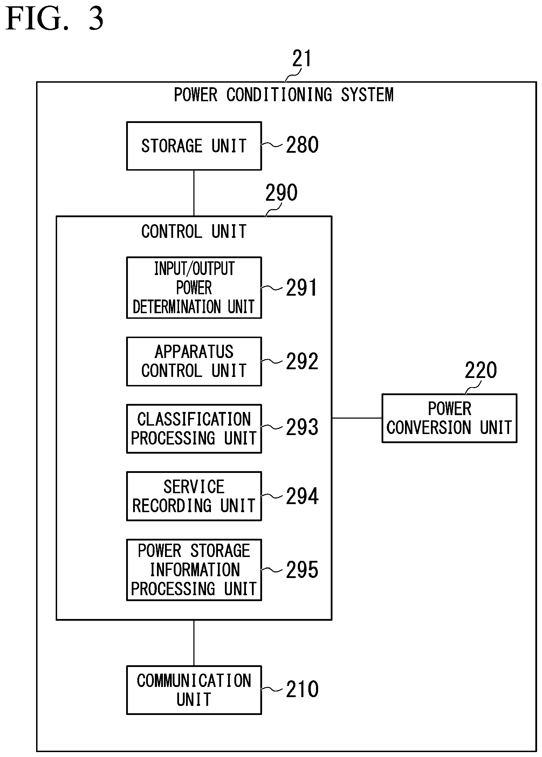

FIG. 3 is a diagram showing an example of the functional configuration of the power conditioning system 21. With the configuration of FIG. 3, the power conditioning system 21 is provided with a communication unit 210, a power conversion unit 220, a storage unit 280, and a control unit 290. The control unit 290 is provided with an input/output power determination unit 291, an apparatus control unit 292, a classification processing unit 293, a service recording unit 294, and a power storage information processing unit 295.

The communication unit 210 communicates with other devices. For example, the communication unit 210 receives information for executing each service, such as receiving the amount for input/output power required for each service from the host control device 31 and the terminal device 22. Further, the communication unit 210 may transmit to one or both of the terminal device 22 and/or the host control device 31 at an appropriate frequency, for example, every predetermined cycle, service performance information (information on the details of input/output power as a result of the execution of the service) and information of the details of the amount of stored power of the power supply apparatus capable of storing power, calculated and stored by the power conditioning system 21.

The power conversion unit 220 converts the input/output power of the connected device and the power system 910, and executes the exchange of power between the connected device and the power system 910. The configuration described with reference to FIG. 2 corresponds to an example of the configuration of the power conversion unit 220.

The storage unit 280 stores various data such as the history of services performed by the distributed power supply system 41, information on the amount of stored power of the storage battery 12, and information on the amount of stored power of the electric vehicle 13. The function of the storage unit 280 is executed by using the storage device included in the power conditioning system 21.

The control unit 290 controls each unit of the power conditioning system 21 to execute various processes. The functions of the control unit 290 are executed by a central processing unit (CPU) included in the power conditioning system 21 reading a program from the storage unit 280 and executing the program.

The input/output power determination unit 291 determines the input/output power for each power supply apparatus on the basis of the input/output power of each of the plurality of services performed by using the power supply apparatus.

Specifically, the input/output power determination unit 291 calculates the total input/output power command value by summing the input/output power command values for each service. Then, the input/output power determination unit 291 distributes the total input/output power command value that has been calculated to each power supply apparatus. The input/output power determination unit 291 corrects, for example, the power efficiency of the converter of the power conditioning system 21 on the basis of the input/output power distributed to each power supply apparatus, to determine the input/output power command value for each power supply apparatus. The command value is also called a calculation value.

The input/output power determination unit 291 corresponds to an example of the input/output power determination means.

The apparatus control unit 292 controls the power supply apparatus in accordance with the input/output power command value determined for each power supply apparatus. That is, the apparatus control unit 292 controls the photovoltaic cell 11, the storage battery 12, and the electric vehicle 13 to input and output the determined input/output power to each apparatus.

The apparatus control unit 292 corresponds to an example of the apparatus control means.

The classification processing unit 293 calculates the details of the input/output power in the service performed by using any one or more of the plurality of power supply apparatuses by classifying for each power supply apparatus.

When the power conditioning system 21 executes a plurality of services, the classification processing unit 293 classifies and calculates, for each service and for each power supply apparatus, the details of the input/output power in the plurality of services performed using any one or more of the plurality of power supply apparatuses. Specifically, the classification processing unit 293 classifies the input/output power in these plurality of services for each power supply apparatus and each service. Moreover, the classification processing unit 293 classifies the input/output power for each service, each power supply apparatus, and each power attribute for at least some of the plurality of services.

The classification processing unit 293 corresponds to an example of the classification processing means.

The classification processing unit 293 may calculate the details of the input/output power for each combination of the following classifications.

(A) Service (for example, for each service such as power sale and $\Delta f$ control)
(B) Distinguishing between input/output of power in a service
(C) Distinguishing between input/output of power with respect to the power system 910 in the entire distributed power supply system 41.
(D) Power supply apparatus (for example, distinguishing between photovoltaic cell 11 / storage battery 12 / electric vehicle 13)
(E) Power attribute (for example, distinguishing between green power/normal power)

For example, the classification processing unit 293 may calculate the input/output power for each classification such as "output power of green power by the storage battery 12 in a power sale (at the time of power output in a power sale)". In this case, "in a power sale" indicates the classification of (A) above. "By the storage battery 12" indicates the classification of (D) above. "Of green power" indicates the classification of (E) above. "Output power" indicates the classification of (C) above. "(At the time of power output in a power sale)" indicates the classification of (B) above.

In this way, the classification processing unit 293, by calculating the details of the input/output power for each detailed classification, accumulates the input/output power for each classification to be able to calculate the consideration for the service (reward or billing).

In particular, the classification processing unit 293 calculates the input/output power for each service and each power supply apparatus, whereby application of the tariff system in accordance with the power attribute becomes possible, such that a green power tariff is applied to the amount of power sold from the photovoltaic cell 11.

Further, the classification processing unit 293 distinguishes by power attribute, such as green power/normal power, to calculate the input/output power amount cumulative value for each power attribute, whereby application of the tariff system in accordance with the attribute of the stored power is possible for not only the photovoltaic cell 11 but also the storage battery 12 and the electric vehicle 13.

Further, the classification processing unit 293 preferentially allocates a power having an attribute corresponding to added value among the powers from the power supply apparatuses to the service in which the attribute of the power is reflected as added value, to calculate the input/output power of each classification.

As a result, consumers can effectively utilize the opportunity to obtain consideration in accordance with the attributes of electricity, such as obtaining consideration for selling power using the green power tariff system.

Note that the classification processing unit 293 may calculate power for each classification using the power command value. Alternatively, the classification processing unit 293 may calculate power for each classification using the power measurement value. Alternatively, the classification processing unit 293 may calculate power for each classification using both the power command value and the power measurement value, such as subtracting the input/output power command value of a certain service from the measurement value of the total input/output power to calculate the input/output power of the remaining services.

Further, the classification processing unit 293 may perform classification by power attribute ((E) above) only for services whose consideration differs depending on the tariff attribute. For example, the classification processing unit 293 may add up the input/output powers for each power attribute for services for which the consideration is the same regardless of the tariff attribute.

The service recording unit 294 records, for each classification by the classification processing unit 293, the details of the amount of power input/output as a result of the execution of the service. For example, when the classification processing unit 293 calculates the cumulative value of the amount of power input/output for each combination of the above classifications (A) to (E), the service recording unit 294 records the cumulative value calculated by the classification processing unit 293 for each combination of the classifications (A) to (E).

The service recording unit 294 corresponds to an example of a service recording means.

The service recording unit 294 stores the cumulative value for each classification in the storage unit 280. Then, the service recording unit 294 updates the cumulative value every predetermined cycle so that the amount of power input/output during that cycle is reflected in the cumulative value.

However, the method for recording the service execution amount by the service recording unit 294 is not limited to the method for storing in the storage unit 280. For example, even if the service recording unit 294 prints out the amount of power input/output for each classification and for each predetermined cycle, the tariff for each service can be calculated on the basis of the printed out record.

The power storage information processing unit 295 calculates the amount of power stored in the power supply apparatuses capable of storing power (storage battery 12 and the electric vehicle 13) for each attribute of power based on the power generation scheme. Specifically, the power storage information processing unit 295 stores and updates the stored power amount of green power and the stored power amount of normal power in the storage unit 280 for each power supply apparatus capable of storing power.

The power storage information processing unit 295 corresponds to an example of the power storage information processing means.

When a power supply apparatus that can store power receives an input of green power such as the power generated by the photovoltaic cell 11 and performs charging, the power storage information processing unit 295 adds the amount of power charged to the green power stored power amount of that power supply apparatus. On the other hand, when the power supply apparatus that can store power receives an input of normal power such as power from the power system 910 and performs changing, the power storage information processing unit 295 adds the amount of power charged to the normal power stored power amount of that power supply apparatus.

Further, when the power supply apparatus capable of storing power discharges, the power storage information processing unit 295 determines whether to discharge green power or normal power depending on the service that is the target of the discharge and the presence of remaining charge. The power storage information processing unit 295 subtracts the amount of power for discharge from either the green power stored power amount or the normal power stored power amount of that power supply apparatus in accordance with the determination to discharge green power or normal power.

In this way, the power storage information processing unit 295 can calculate the consideration in accordance with the attribute of power such as green power for not only the photovoltaic cell 11 but also the storage battery 12 and the electric vehicle 13 by recording the amount of stored power of the power supply apparatus for each power attribute.

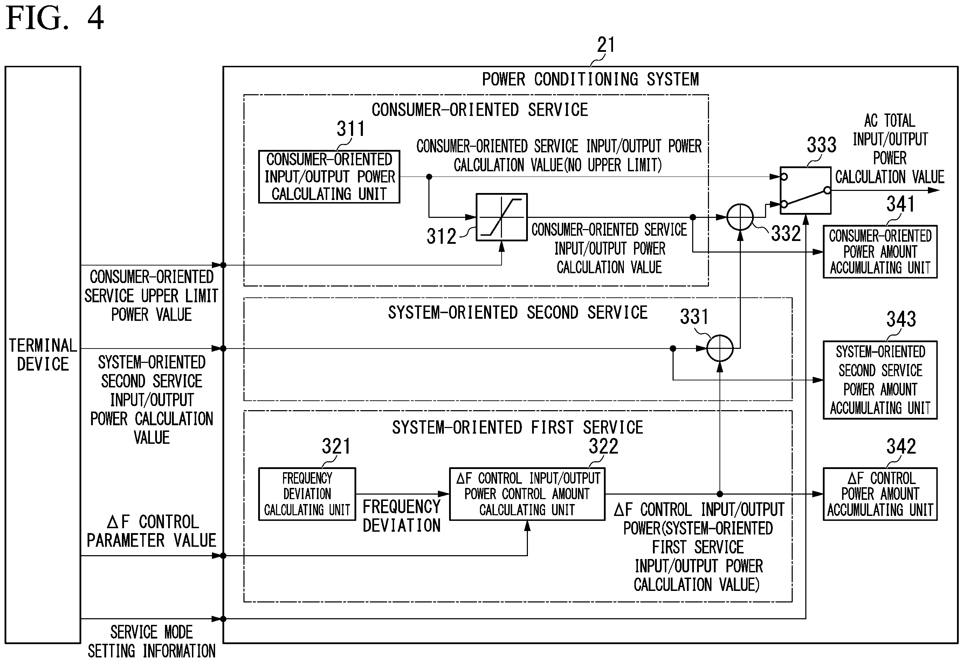

FIG. 4 is a diagram showing an example of a configuration in which the power conditioning system 21 calculates an input/output power command value. FIG. 4 describes an example in which the power conditioning system 21 performs an energy management service, $\Delta f$ control, and yet another ancillary service. However, as described above, the service provided by the power conditioning system 21 is not limited to a specific one.

In the configuration shown in FIG. 4, the power conditioning system 21 is provided with a consumer-oriented input/output power calculating unit 311, a limiter 312, a frequency deviation calculating unit 321, a $\Delta f$ control charge/discharge power control amount calculating unit 322, a first adder 331, a second adder 332, a switch 333, a consumer-oriented power amount accumulating unit 341, a $\Delta f$ control power amount accumulating unit 342, and a system-oriented second service power amount accumulating unit 343.

The consumer-oriented input/output power calculating unit 311 calculates an input/output power calculation value for a consumer-oriented service. As a technique for calculating the input/output power calculation value for a consumer-oriented service, the consumer-oriented input/output power calculating unit 311 can use an existing technique for calculating the input/output in the energy management service.

The limiter 312 sets an upper limit for each of consumer-oriented charging power and discharging power in order to be performed at the same time as frequency control-oriented charging/discharging. The limiter 312 limits the charge/discharge power used for consumer-oriented services to the upper limit or less. As a result, when the distributed power supply system 41 simultaneously executes the energy management service and the ancillary service, it is possible to secure the charge/discharge power for the ancillary service.

The frequency deviation calculating unit 321 measures the system frequency and calculates the deviation from the reference frequency.

The Δf control charge/discharge power control amount calculating unit 322 calculates the charge/discharge power control amount for the frequency deviation (Δf) calculated by the frequency deviation calculating unit 321. The parameters required for the calculation are set by the host control device 31 and transmitted to the power conditioning system 21 via the terminal device 22.

The first adder 331 and the second adder 332 each perform adding. By combining the first adder 331 and the second adder 332, the total charge/discharge power obtained by adding the consumer-oriented charge/discharge power, the LFC charge/discharge power, and the Δf control charge/discharge power is calculated.

The switch 333 switches whether or not to use simultaneous multi-use, which simultaneously executes the energy management service and the ancillary service. When simultaneous multi-use is not used, the output of the consumer-oriented input/output power calculating unit 311 is used as the AC total input/output power calculation value as is without receiving the application of the limiter 312. On the other hand, when simultaneous multi-use is used, the limiter 312 is applied to the output of the consumer-oriented input/output power calculating unit 311 as described above, and further, the total value obtained by adding the Δf control charge/discharge power calculation value and the system-oriented second service input/output power calculation value is used as the AC total input/output power calculation value.

The combination of the consumer-oriented input/output power calculating unit 311, the limiter 312, the frequency deviation calculating unit 321, the Δf control charge/discharge power control amount calculating unit 322, the first adder 331, the second adder 332, and the switch 333 corresponds to the example of the input/output power determination unit 291 in FIG. 3.

The consumer-oriented power amount accumulating unit 341 accumulates the consumer-oriented input/output power calculation value. The Δf control power amount accumulating unit 342 accumulates the Δf control input/output power calculation value. The system-oriented second service power amount accumulating unit 343 accumulates the input/output power calculation value in the ancillary service executed by the distributed power supply system 41 other than for Δf control.

The consumer-oriented power amount accumulating unit 341, the Δf control power amount accumulating unit 342, and the system-oriented second service power amount accumulating unit 343 correspond to an example of the classification processing unit 293 and the service recording unit 294 when the classification processing unit 293 calculates the power for each classification using the power command value. Each of the consumer-oriented power amount accumulating unit 341, the Δf control power amount accumulating unit 342, and the system-oriented second service power amount accumulating unit 343 accumulates the input/output power amount for each classification by the aforementioned classification processing unit 293.

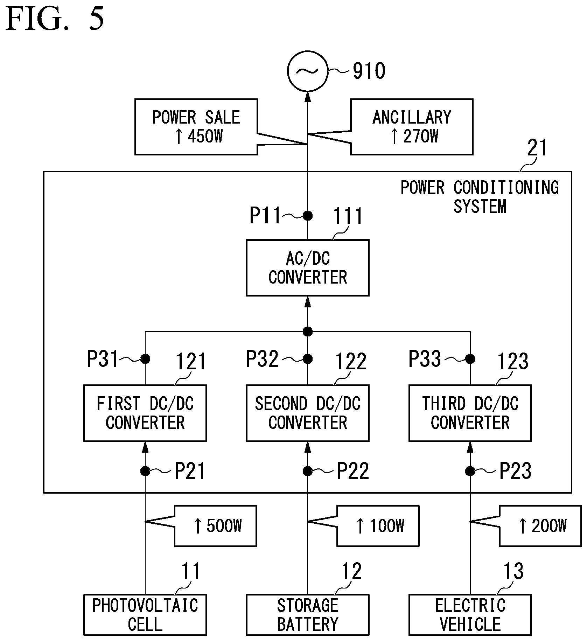

FIG. 5 is a diagram showing a first example of the input/output power allocation calculation of the power supply apparatus by the classification processing unit 293.

FIG. 5 shows an example in which the total input/output power is output (reverse power flow) and both the storage battery 12 and the electric vehicle 13 are discharging. In this case, the classification processing unit 293 calculates, in particular, the details of the input/output power of each service.

In the example of FIG. 5, with regard to the input/output power for each service, it is assumed that the upper limit of a power sale (upper limit of the energy management service) is 1000 watts (W). For example, the host control device 31 determines the upper limit value of the energy management service. In the case of selling power, the total input/output power is the output (reverse power flow) from the power conditioning system 21 to the power system 910. The command value of the ancillary service is 270 watts of output.

Further, the total input/output power is the output of P11 = 720 (watts), and the power actually sold among the upper limit of power sales is 720 - 270 = 450 (watts). When the classification processing unit 293 uses the total input/output power, the calculation value may be used or the measurement value may be used.

Further, the output power of the photovoltaic cell 11 is P21 = 500 (watts). The input/output power of the storage battery 12 is the output (discharge) of P22 = 100 (watts). The input/output power of the electric vehicle 13 is the output (discharge) of P23 = 200 (watts).

Not all the output power from the power supply apparatus is used for the service (or charging of the power supply apparatus that can store power), but some power is consumed as a loss due to the conversion efficiency of the converter of the power conditioning system 21. In the case of the example of FIG. 5, the total of the output power of the photovoltaic cell 11, the storage battery 12, and the electric vehicle 13 is P21 + P22 + P23 = 800 (watts), while the total input/output power is P11 = 720 (watts), such that 800 - 720 = 80 (watts) is the loss.

When the classification processing unit 293 allocates the input/output power of each power supply apparatus to the details of the input/output power of each service, it is necessary to perform the allocation while anticipating the loss in order to avoid allocating power exceeding the actually suppliable input/output power.

Here, P11 (total input/output power) is expressed by Equation (1).

[Formula 1]

$$P11 = \eta \times (P31 + P32 + P33) \qquad \cdots (1)$$

$\eta$ indicates the conversion efficiency of the AC/DC converter 111.
Further, P31 is expressed by Equation (2).

[Formula 2]

$$P31 = \eta_{PV} \times P21 \qquad \cdots (2)$$

$\eta_{PV}$ indicates the conversion efficiency of the first DC/DC converter 121.
Further, P32 is represented by Equation (3).

[Formula 3]

$$P32 = \eta_{B} \times P22 \qquad \cdots (3)$$

$\eta_{B}$ indicates the conversion efficiency of the second DC/DC converter 122.
Further, P33 is represented by Equation (4).

[Formula 4]

$$P33 = \eta_{EV} \times P23 \qquad \cdots (4)$$

$\eta_{EV}$ indicates the conversion efficiency of the third DC/DC converter 123.
However, since the values of $\eta$, $\eta_{PV}$, $\eta_{B}$, and $\eta_{EV}$ change depending on the magnitude of the output and the state of high and low temperatures, it is difficult to calculate the values of P31, P32 and P33 with high accuracy.
Therefore, in the calculation performed by the classification processing unit 293, the values of P11, P21, P22 and P23 are used (the values of P31, P32 and P33 are not used). The classification processing unit 293 may use calculation values (command values) of P11, P21, P22 and P23, or may use measurement values.
Of the total input/output power (P11), the power from the photovoltaic cell 11 is denoted as P21'. P21' is also referred to as an AC conversion value of the output power of the photovoltaic cell 11 (P21).
Of the total input/output power (P11), the power from the storage battery 12 (or the power to the storage battery 12) is denoted as P22'. P22' is also referred to as an AC conversion value of the input/output power (P22) of the storage battery 12.
Of the total input/output power (P11), the power from the electric vehicle 13 (or the power to the electric vehicle 13) is denoted as P23'. P23' is also referred to as an AC conversion value of the input/output power (P23) of the electric vehicle 13.
Here, it is assumed that the ratio of the power component from each power supply apparatus (which outputs power) in the details of the total input/output power is equal to the ratio of the output power of each power supply apparatus. In the case of the example of FIG. 5, since the photovoltaic cell 11, the storage battery 12, and the electric vehicle 13 all output power, P21' (the AC conversion value of the output power of the photovoltaic cell 11) is as shown in Equation (5).

[Formula 5]

$$P21' = P11 \times \frac{P21}{P21 + P22 + P23} \qquad \cdots (5)$$

Similarly to Equation (5), P22' and P23' can also be shown using the ratios of P21, P22, and P23.
Further, the conversion efficiencies of the AC/DC converter 111, the first DC/DC converter 121, the second DC/DC converter 122, and the third DC/DC converter 123 are rounded and shown by one fixed value coefficient. This coefficient is referred to as a DDA coefficient.

In the case of the example of FIG. 5 (that is, when both the storage battery 12 and the electric vehicle 13 are discharging), P11 (total input/output power) is expressed by Equation (6).

[Formula 6]

$$P11 = \eta_{DDA} \times (P21 + P22 + P23) \qquad \cdots (6)$$

$\eta_{DDA}$ indicates the DDA coefficient.

The classification processing unit 293 calculates the value of the DDA coefficient using the values of P11, P21, P22, and P23. In the case of the example of FIG. 5, the DDA coefficient is calculated to be 0.9 as shown in Equation (7).

[Formula 7]

$$\eta_{DDA} = \frac{P11}{P21+P22+P23} = \frac{450+270}{500+100+200} = 0.9 \qquad \cdots (7)$$

The classification processing unit 293 may use the calculation value or the measurement value as the values of P11, P21, P22, and P23.

Each of P21', P22', and P23' can be calculated using the DDA coefficient.

The standard for how the classification processing unit 293 allocates power to the details of the input/output power when calculating the details of the input/output power of each service is referred to as a policy.

As a premise of applying the policy to the calculation performed by the classification processing unit 293, the input/output power determination unit 291 shall determine the input/output power of each power supply apparatus on the basis of the same policy as the classification processing unit 293.

In the following, a case where the classification processing unit 293 calculates the details of the input/output power of each service on the basis of each of the following policies will be described as an example.

Policy 1: The power generation output of the photovoltaic cell 11 is output together with the green value as a solar power sale service within the range where the upper limit of the energy management service is 100%. Accordingly, the classification processing unit 293 calculates that the output power for the solar power sale service is the smaller of the upper limit value of the energy management service and the AC conversion value (P21') of the output power of the photovoltaic cell 11. In the example of FIG. 5, the upper limit of the energy management service is 1000 watts.

This policy corresponds to an example of the classification processing unit 293 preferentially allocating to a service in which the attribute of the power is reflected as an added value a power having the attribute corresponding to the added value among the powers from the power supply apparatuses, to calculate the input/output power of each classification.

Policy 2: When the generated power of the photovoltaic cell 11 is greater (more) than the upper limit of the energy management service, the remainder of the generated power of the photovoltaic cell 11 is used for charging the storage battery 12 and the electric vehicle 13. Charging in this case will be performed on the DC end side of the power conditioning system 21 (without going through the AC/DC converter 111).

Policy 3: When the power of the ancillary service is in the reverse power flow direction, the normal power is preferentially allocated. For example, when the discharge power of the storage battery 12 or the electric vehicle 13 is allocated to the ancillary service, the power stored as normal power is preferentially used.

However, the policy applied to (the calculation of the input/output power determination unit 291 and) the calculation of the classification processing unit 293 is not limited to a specific policy. For example, if the presence or absence of green value does not affect power sales, the application of the above policy 1 may be excluded. Further, when it is necessary to plan the output in advance, a policy such as "when the output power of the photovoltaic cell 11 does not reach the planned value, sufficiency is achieved by discharge from one or both of the storage battery 12 and the electric vehicle 13" may be used.

The classification processing unit 293 uses Equation (8) to calculate P21' (the AC conversion value of the output power of the photovoltaic cell 11) as the output of 450 watts (reverse power flow).

[Formula 8]

$$P21' = \eta_{DDA} \times P21 = 0.9 \times 500 = 450 \qquad \cdots (8)$$

P21'= 450 (watts), which is smaller than the upper limit of the energy management service (1000 watts). Therefore, the classification processing unit 293 allocates all of P21'= 450 (watts), which is green power, to the power sales on the basis of the above policy 1. As a result, all the green power derived from the photovoltaic cell 11 is allotted to the 450 watts of sold power. Here, "derived" is used to mean the output source of the power.

Further, the classification processing unit 293 calculates P22' (AC conversion value of the output power of the storage battery 12) as an output of 90 watts using Equation (9).

[Formula 9]

$$P22' = \eta_{DDA} \times P22 = 0.9 \times 100 = 90 \qquad \cdots (9)$$

The classification processing unit 293 calculates P23' (AC conversion value of the output power of the electric vehicle 13) as an output of 180 watts using Equation (10).

[Formula 10]

$$P23' = \eta_{DDA} \times P23 = 0.9 \times 200 = 180 \qquad \cdots (10)$$

The classification processing unit 293 allocates P22' + P23' = 270 (watts) to the 270 watts of the ancillary service. Therefore, the details of the power (270 watts) of the ancillary service amount to 90 watts of power derived from the storage battery 12 and 180 watts of power derived from the electric vehicle 13.

In this way, the classification processing unit 293 can allocate the input/output power of the power supply apparatus to each service. This makes it possible to calculate the consideration considering the attributes of the power such as green power.

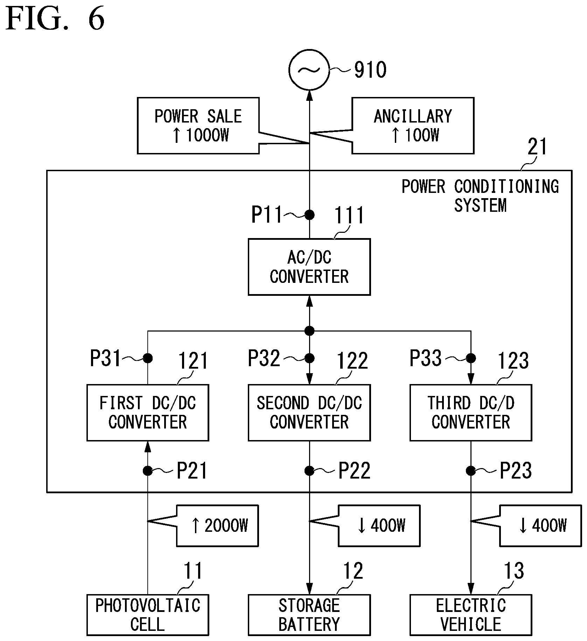

FIG. 6 is a diagram showing a second example of the input/output power allocation calculation of a power supply apparatus by the classification processing unit 293.

FIG. 6 shows an example in which the total input/output power is output (reverse power flow) and both the storage battery 12 and the electric vehicle 13 are being charged. In this case, since only the photovoltaic cell 11 outputs the power among the power supply apparatuses, the power of the reverse power flow service consists of the power derived from the photovoltaic cell 11.

Further, in the example of FIG. 6, since the storage battery 12 and the electric vehicle 13 are being charged, the classification processing unit 293 calculates the details of the charging power of these power supply apparatuses. Of the power supply apparatuses, only the photovoltaic cell 11 is outputting power, so their charging power is the power derived from the photovoltaic cell 11. The storage information processing unit 295 updates the record of the stored power amount stored in the storage unit 280 on the basis of the details of the obtained stored power.

In the example of FIG. 6, it is assumed that the upper limit of power sales (upper limit of energy management service) is 1000 watts (output) for the input/output power for each service. Further, the command value of the ancillary service is an output of 100 watts.

Further, the total input/output power is the output of P11 = 1100 (watts), and the power sold is 1100 - 100 = 1000 (watts). Power selling is performed at the upper limit of 1000 watts.

Further, the output power of the photovoltaic cell 11 is P21 = 2000 (watts). The input/output power of the storage battery 12 is an input (charge) of P22 = 400 (watts). The input/output power of the electric vehicle 13 is also an input (charging) of P23 = 400 (watts).

In the example of FIG. 6, since both the storage battery 12 and the electric vehicle 13 are being charged, the power supply apparatus outputting power is only the photovoltaic cell 11. In this case, it is shown as P11 = P21'.

When ignoring the loss in charging from the photovoltaic cell 11 to the storage battery 12 and the loss in charging from the photovoltaic cell 11 to the electric vehicle 13, the DDA coefficient is calculated to be about 0.92 as in Equation (11).

[Formula 11]

$$\eta_{DDA} = \frac{P11}{P21-P22-P23} = \frac{1000+100}{2000-400-400} \fallingdotseq 0.92 \qquad \cdots (11)$$

By indicating the efficiency of the power conditioning system 21 with one coefficient as in the DDA coefficient $\eta_{DDA}$ of Equation (11), the calculation of the classification processing unit 293 can be lightened.

In the example of FIG. 6, assuming that all 2000 watts of power generated by the photovoltaic cell 11 are used for power sales, the power becomes $0.92 \times 2000 = 1840$ (watts), which exceeds the upper limit of 1000 watts of power sold. Therefore, the classification processing unit 293 sets the selling power to 1000 watts, with all 1000 watts of the selling power being green power derived from the photovoltaic cell 11 in accordance with the above policy 2. Setting the selling power to 1000 watts is consistent with the above-mentioned calculation based on the total input/output power.

Further, in the example of FIG. 6, since it is the photovoltaic cell 11 that outputs the power, the classification processing unit 293 calculates 100 watts of the output power of the ancillary service to be derived from the photovoltaic cell 11. However, if there is no green power tariff setting with respect to the ancillary service, the classification processing unit 293 may not calculate (omit) the details of the output power of the ancillary service.

The classification processing unit 293 calculates each of the 400 watts of charging power of the storage battery 12 and the 400 watts of charging power of the electric vehicle 13 as being derived from the photovoltaic cell 11. Based thereupon, the power storage information processing unit 295 updates the stored power amount information for green power amount of the storage battery 12 and the stored power amount information for green power amount of the electric vehicle 13. Specifically, the power storage information processing unit 295 adds the amount of power from charging to each of the stored power amount information of the amount of green power of the storage battery 12 and the stored power amount information of the amount of the green power of the electric vehicle 13 stored by the storage unit 280.

In the example of FIG. 6, the service recording unit 294 may record the following for a power sale:

Input/output power: 1000 watts
Distinction between Input/output: Output (reverse power flow)
Input/output of total input/output power: Output
Power attribute: Green power (1000 watts)

The power of the ancillary service may also be recorded by the service recording unit 294 in the same format as in the case of selling power. The same applies to other examples.

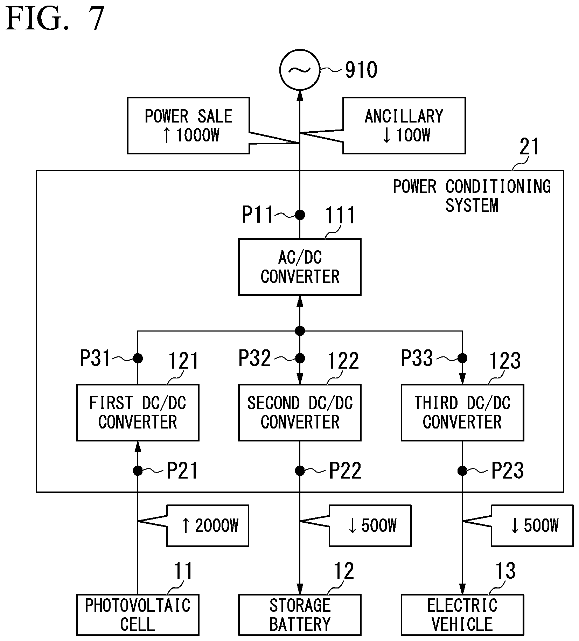

FIG. 7 is a diagram showing a third example of the allocation calculation for the input/output power of a power supply apparatus by the classification processing unit 293.

FIG. 7 shows another example in which the total input/output power is output (reverse power flow) and both the storage battery 12 and the electric vehicle 13 are being charged. While in the example of FIG. 6, the power of the ancillary service is output (reverse power flow), in the example of FIG. 7, the power of the ancillary service is input (forward power flow).

In the example of FIG. 7, it is assumed that the upper limit of selling power (upper limit of energy management service) is (output of) 1000 watts for the input/output power for each service. Further, the command value of the ancillary service is an input of 100 watts (forward power flow).

Further, the total input/output power is the output of P11 = 900 (watts), and the power sold is 900 + 100 = 1000 (watts). Power is sold at the power selling upper limit of 1000 watts.

Further, the output power of the photovoltaic cell 11 is P21 = 2000 (watts). The input/output power of the storage battery 12 is the input (charge) of P22 = 500 (watts). The input/output power of the electric vehicle 13 is also the input (charge) of P23 = 500 (watts).

Also, in the example of FIG. 7, it is assumed that the classification processing unit 293 calculates the DDA coefficient in the same manner as in Equation (11) in the case of FIG. 6. Here, the classification processing unit 293 calculates the DDA coefficient as 0.9 on the basis of Equation (12).

[Formula 12]

$$\eta_{DDA} = \frac{P11}{P21-P22-P23} = \frac{1000-100}{2000-500-500} = 0.9 \qquad \cdots (12)$$

Similarly to the case of FIG. 6, in the example of FIG. 7, the classification processing unit 293 sets the selling power to 1000 watts, with all 1000 watts of the selling power being green power derived from the photovoltaic cell 11 in accordance with the above policy 2. Setting the selling power to 1000 watts is consistent with the above-mentioned calculation based on the total input/output power.

On the other hand, unlike the case of FIG. 6, in the example of FIG. 7, the power of the ancillary service is input (forward power flow). Therefore, both the output power of the photovoltaic cell 11, which is green power, and the input power of the ancillary service, which is normal power, are used for charging the storage battery 12 and the electric vehicle 13. The classification processing unit 293 calculates the details of the charging power of each of the storage battery 12 and the electric vehicle 13, so that the power storage information processing unit 295 can update the information of the stored power of the storage battery 12 and the electric vehicle 13.

Of the output power of the photovoltaic cell 11, the power used for the power sale is represented as P21s. The classification processing unit 293 calculates P21s to be about 1111 watts as in Equation (13).

[Formula 13]

$$P21s = \frac{1000}{\eta_{DDA}} = \frac{1000}{0.9} \fallingdotseq 1111 \qquad \cdots (1\,3)$$

The classification processing unit 293 calculates the power used for storage by the storage battery 12 and the electric vehicle 13, among the output power of the photovoltaic cell 11, as 2000 - 1111 = 889 (watts).

The handling of the charging power to the storage battery 12 and the charging power to the electric vehicle 13 can also be stipulated in the policy. Here, a policy of preferentially allocating green power to the charging power of the electric vehicle 13 is used.

The classification processing unit 293 allocates 500 watts out of the 889 watts to charge the electric vehicle 13 in accordance with the policy. The charging power of 500 watts of the electric vehicle 13 is all power derived from the photovoltaic cell 11, which is green power.

Further, the classification processing unit 293 allocates 889 - 500 = 389 watts for charging the storage battery 12.

Further, the classification processing unit 293 allocates all the power of the ancillary service to the charging of the storage battery 12. When the power of the ancillary service is converted into power at the DC end, it becomes 90 watts as shown in Equation (14).

[Formula 14]

$$P11A' = \eta_{DDA} \times P11A = 0.9 \times 100 = 90 \qquad \cdots (1\,4)$$

Comparing the charging power of the storage battery 12 with the calculated power to be allocated, an error of 500 - (389 + 90) = 21 (watts) arises. The method of dealing with the occurrence of such an error may also be defined as a policy. For example, with respect to the error amount, normal power (for example, system power) may be increased or decreased to eliminate the error.

Alternatively, the aforementioned error occurs because the power loss from the AC side to the DC side is not taken into consideration when calculating the DDA coefficient. While it would be necessary to solve a quadratic equation if this loss is considered, the DDA coefficient value can be calculated with higher accuracy. Therefore, the classification processing unit 293a may set with a policy to select the method for calculating the efficiency of the power conditioning system 21 on the basis of the balance between the calculation accuracy requirement (error tolerance) and the calculation load or calculation time tolerance.

Not only the calculation error but also the measurement error and how to deal with noise may be defined with a policy.

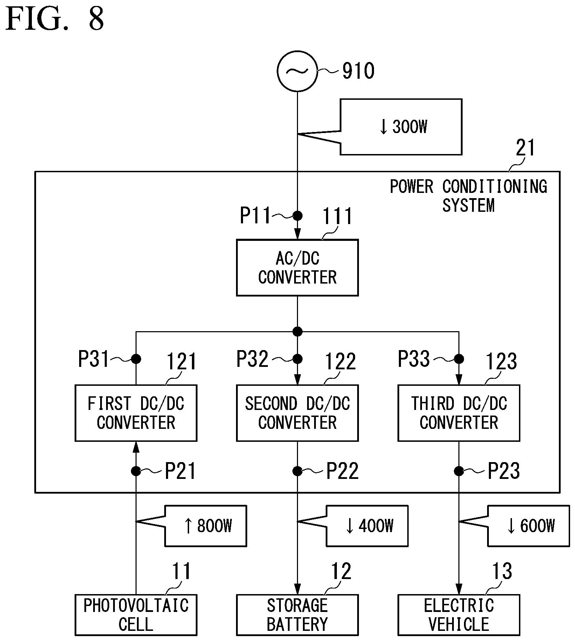

FIG. 8 is a diagram showing a fourth example of the input/output power allocation calculation of the power supply apparatus by the classification processing unit 293. FIG. 8 shows an example of the input/output power of the power conditioning system 21 when the input/output power of the power system 910 is an input power (forward power flow).

When the input/output power of the power system 910 is a forward power flow, the AC/DC converter 111 outputs power from the AC side to the DC side. In this case, the efficiency coefficient calculated by the classification processing unit 293 is referred to as an ADD coefficient. Regarding the ADD coefficient, an example will be described of the classification processing unit 293 using one fixed value coefficient that rounds the conversion efficiency of the AC/DC converter 111, the first DC/DC converter 121, the second DC/DC converter 122, and the third DC/DC converter 123.

In the example of FIG. 8, the input/output power (total input/output power) of the power system 910 is an input of P11 = 300 (watts).

Further, the output power of the photovoltaic cell 11 is P21 = 800 (watts). The input/output power of the storage battery 12 is an input (charging) of P22 = 400 (watts). The input/output power of the electric vehicle 13 is an input (charging) of P23 = 600 (watts).

When ignoring the loss in charging from the photovoltaic cell 11 to the storage battery 12 and the loss in charging from the photovoltaic cell 11 to the electric vehicle 13, the relationship between P11, P21, P22, and P23 is shown by Equation (15).

[Formula 15]

$$\eta_{ADD} \times P11 = -P21 + P22 + P23 \qquad \cdots (15)$$

$\eta_{ADD}$ indicates the ADD coefficient.

In this case, Equation (16) is obtained from Equation (15), and the classification processing unit 293 calculates the ADD coefficient to be about 0.67 on the basis of Equation (16).

[Formula 16]

$$\eta_{ADD} = \frac{-P21 + P22 + P23}{P11} = \frac{200}{300} \fallingdotseq 0.67 \qquad \cdots (16)$$

Note that the ADD coefficient value of 0.67 is low in terms of the efficiency of a general power conditioning system. This ignores the DC/DC/DC conversion loss in charging from the photovoltaic cell 11 to the storage battery 12 and the DC/DC/DC conversion loss in charging from the photovoltaic cell 11 to the electric vehicle 13.

The DC/DC/DC conversion loss in charging from the photovoltaic cell 11 to the storage battery 12 is the conversion loss of the first DC/DC converter 121 and the conversion loss of the second DC/DC converter 122. The DC/DC/DC conversion loss in charging from the photovoltaic cell 11 to the electric vehicle 13 is the conversion loss of the first DC/DC converter 121 and the conversion loss of the third DC/DC converter 123.

Alternatively, the classification processing unit 293 may set with a policy to select the method for calculating the efficiency of the power conditioning system 21 on the basis of the balance between the calculation accuracy requirement (error tolerance) and the calculation load or calculation time tolerance. For example, in addition to the above ADD coefficient, a calculation model of efficiency of the power conditioning system 21 that uses the parameters of temperature, input/output power of the power system 910, output power of the photovoltaic cell 11, input/output power of the storage battery 12, and input/output power of the electric vehicle 13 may be prepared by simulation or the like. Then, the classification processing unit 293 may select either the calculation using the ADD coefficient or the calculation using the calculation model in accordance with the policy.

Using the obtained ADD coefficient, the classification processing unit 293 calculates the power used for charging the storage battery 12 and the electric vehicle 13 among the input power from the power system 910 to be 200 watts as shown in Equation (17).

[Formula 17]

$$P11' = \eta_{ADD} \times P11 = 0.67 \times 300 \fallingdotseq 200 \qquad \cdots (17)$$

P11' denotes the power used for charging the storage battery 12 and the electric vehicle 13 among the input power from the power system 910. P11' is also referred to as a DC conversion value of the input power from the power system 910.

The classification processing unit 293 distributes the generated power (P21) of the photovoltaic cell 11 and the DC conversion value (P11') of the input power from the power system 910 to the charging power of the storage battery 12 and the charging power of the electric vehicle 13. The distribution method in this case may also be defined as a policy.

For example, the classification processing unit 293 performs a calculation in accordance with the policy that evenly distributes the generated power (P21) of the photovoltaic cell 11 and the DC conversion value (P11') of the input power from the power system 910 to the storage battery 12 and the electric vehicle 13.

In this case, of the charging power of the storage battery 12, the classification processing unit 293 calculates the power derived from the photovoltaic cell 11 as 800 × 400/(400 + 600) = 320 (watts). Further, of the charging power of the storage battery 12, the classification processing unit 293 calculates the power derived from the power system 910 as 200 × 400/(400 + 600) = 80 (watts).

Further, of the charging power of the electric vehicle 13, the classification processing unit 293 calculates the power derived from the photovoltaic cell 11 as 800 × 600 / (400 + 600) = 480 (watts). Further, of the charging power of the electric vehicle 13, the classification processing unit 293 calculates the power derived from the power system 910 as 200 × 600/(400 + 600) = 120 (watts).

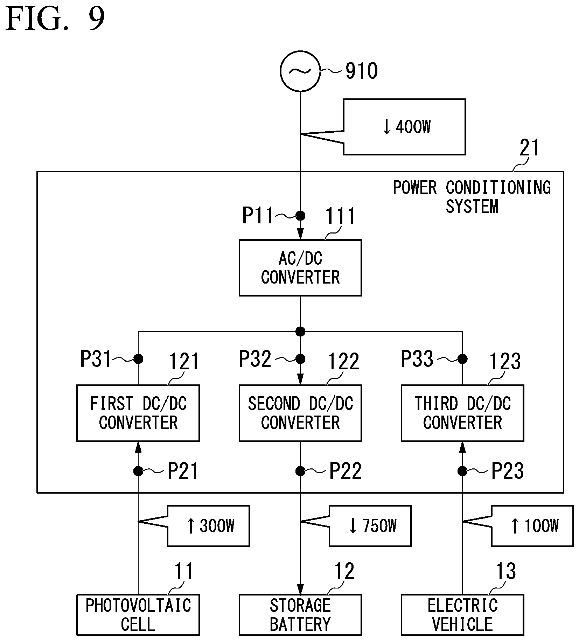

FIG. 9 is a diagram showing a fifth example of the input/output power allocation calculation of a power supply apparatus by the classification processing unit 293. FIG. 9 shows another example of the input/output power of the power conditioning system 21 when the input/output power of the power system 910 is input power (forward power flow). In the example of FIG. 8, the power of the electric vehicle 13 is input power (charge), whereas in the example of FIG. 9, the power of the electric vehicle 13 is output power (discharge).

In the example of FIG. 9, the input/output power of the power system 910 (total input/output power) is the input of P11 = 400 (watts).

Further, the output power of the photovoltaic cell 11 is P21 = 300 (watts). The input/output power of the storage battery 12 is the input (charge) of P22 = 750 (watts). The input/output power of the electric vehicle 13 is the output (discharge) of P23 = 100 (watts).

The classification processing unit 293 calculates the ADD coefficient as 0.875 on the basis of Equation (18).

[Formula 18]

$$\eta_{ADD} = \frac{-P21 + P22 - P23}{P11} = \frac{350}{400} = 0.875 \qquad \cdots (1\,8)$$

In the example of FIG. 9, of the input power from the power system 910, the power used for charging the storage battery 12 is referred to as a DC conversion value of the input power from the power system 910 and is denoted as P11'.

The classification processing unit 293 calculates P11' = 350 (watts) as in Equation (19).

[Formula 19]

$$P11' = \eta_{ADD} \times P11 = 0.875 \times 400 = 350 \qquad \cdots (1\,9)$$

As a result, the classification processing unit 293 calculates that, of the charging power of the storage battery 12, the power derived from the photovoltaic cell 11 is 300 watts, the power derived from the electric vehicle 13 is 100 watts, and the power derived from the power system 910 is 350 watts. Of these, the power derived from the photovoltaic cell 11 is green power. The power derived from the power system 910 is generally normal power. When the stored power amount of the electric vehicle 13 includes the power amount of green power and power amount of normal power, the classification processing unit 293 selects whether to discharge the green power or the normal power to the electric vehicle 13. In this case, the selection criteria of the classification processing unit 293 may be defined in the policy.

However, the method in which the classification processing unit 293 calculates the details of power using the inverter efficiency is not limited to a method using one fixed conversion efficiency that rounds the conversion efficiency of the AC/DC converter 111, the first DC/DC converter 121, the second DC/DC converter 122, and the third DC/DC converter 123.

For example, the classification processing unit 293 may use the conversion efficiencies of the AC/DC converter 111, the first DC/DC converter 121, the second DC/DC converter 122, and the third DC/DC converter 123. Alternatively, when the classification processing unit 293 uses one conversion efficiency that combines these conversion efficiencies, the value of the conversion efficiency may be calculated in accordance with the conditions.

Alternatively, a means for measuring the input/output power value after DC/DC conversion may be provided so that the classification processing unit 293 multiplies the input/output power value after DC/DC conversion by the conversion efficiency of the AC/DC converter 111.

Further, the classification processing unit 293 may use the same value conversion efficiency for all resources, or may use different conversion efficiencies for respective resources. The resource here refers to the type of power supply apparatus such as photovoltaic cell, storage battery, and electric vehicle.

Alternatively, the classification processing unit 293 may use conversion efficiencies of different values depending on the temperature or the input/output power. For example, the classification processing unit 293 may use a data table (tabular format data) showing conversion efficiency in accordance with the type of the power supply apparatus, temperature, or power, or a combination thereof. On the other hand, when the conversion efficiency of a fixed value is used, the classification processing unit 293 may use the average value of conversion efficiency values under various conditions.

Further, when the classification processing unit 293 obtains the AC conversion value for each power supply apparatus, the AC conversion value of any one power supply apparatus may be calculated by subtracting the AC conversion value of all other power supply apparatuses from the total input/output power.

Further, the classification processing unit 293 may use an instantaneous value (watt) for calculating the AC conversion value, or may use an integrated value (watt hour).

Further, the power used by the classification processing unit 293 as the input/output power on the AC side is not limited to the input/output power at the AC end of the AC/DC converter 111. For example, the classification processing unit 293 may use the input/output power at the receiving point.

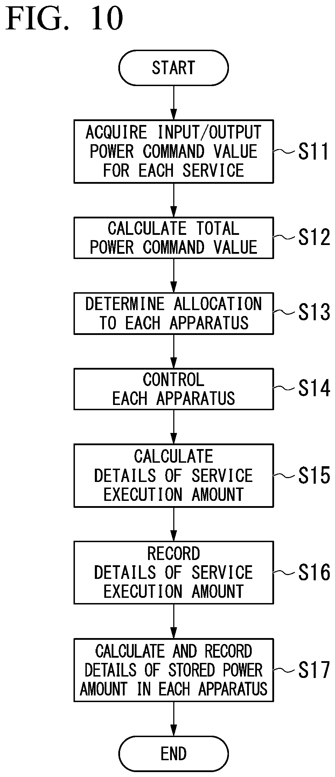

Next, the operation of the power conditioning system 21 will be described with reference to FIGS. 10 to 13.

FIG. 10 is a flowchart showing an example of the processing procedure performed by the power conditioning system 21. The power conditioning system 21 repeats the process of FIG. 10 at predetermined intervals.

In the process of FIG. 10, the input/output power determination unit 291 acquires the input/output power command value for each service (Step S11).

Next, the input/output power determination unit 291 sums up the power command values for each service to calculate the total power command value (Step S12). The total power command value is a command value of the input/output power of the power conditioning system 21 (the command value of the input/output power on the AC end side of the AC/DC converter 111).

Then, the input/output power determination unit 291 determines the allocation of the calculated total power command value to each of the power supply apparatus (Step S13). The input/output power determination unit 291 calculates the input/output power of each power supply apparatus for obtaining the total power command value in consideration of the efficiency (loss) of the converter by using the above-mentioned DDA coefficient or the like. In doing so, the input/output power determination unit 291 determines the allocation of the total power command value to each power supply apparatus by using the same policy as the policy used by the classification processing unit 293, such as preferentially allocating green power to power sold.

The apparatus control unit 292 controls the power supply apparatus to execute the input/output of the input/output power determined by the input/output power determination unit 291 (Step S14).

Then, the classification processing unit 293 calculates the details of the service execution amount (Step S15). Specifically, the classification processing unit 293 calculates the input/output power for each power supply apparatus and for each power attribute, as described with reference to FIGS. 5 to 9. Then, the classification processing unit 293 multiplies the calculated input/output power by the time to convert to the input/output power amount. Further, the classification processing unit 293 classifies the calculated power amount in more detail, for example, as in the combination of the classifications (A) to (E) described above.

The service recording unit 294 records the details of the service execution amount calculated by the classification processing unit 293 (Step S16). Specifically, the service recording unit 294 stores in the storage unit 280 the accumulation of the service execution amount calculated by the classification processing unit 293 for each classification.

Further, the power storage information processing unit 295 calculates and records the details of the stored power amount of the rechargeable power supply apparatus by using the input/output power for each power supply apparatus and for each power attribute calculated by the classification processing unit 293 in Step S15 (Step S17).

Specifically, the power storage information processing unit 295 stores in the storage unit 280 the stored power amount for each power supply apparatus capable of being charged and discharged and for each power attribute. Then, the power storage information processing unit 295 multiplies the input/output power calculated by the classification processing unit 293 by the time to convert to the power amount, and causes the converted power amount to be reflected in the stored power amount for each power supply apparatus capable of being charged and discharged and for each power attribute stored by the power storage unit 280. When the input/output power is an output, it means discharge, so the power storage information processing unit 295 subtracts the power amount calculated from the stored power amount stored in the storage unit 280. When the input/output power is an input, it means charging, so the power storage information processing unit 295 adds the calculated power to the stored power amount stored in the storage unit 280.

After Step S17, the power conditioning system 21 ends the process of FIG. 10.

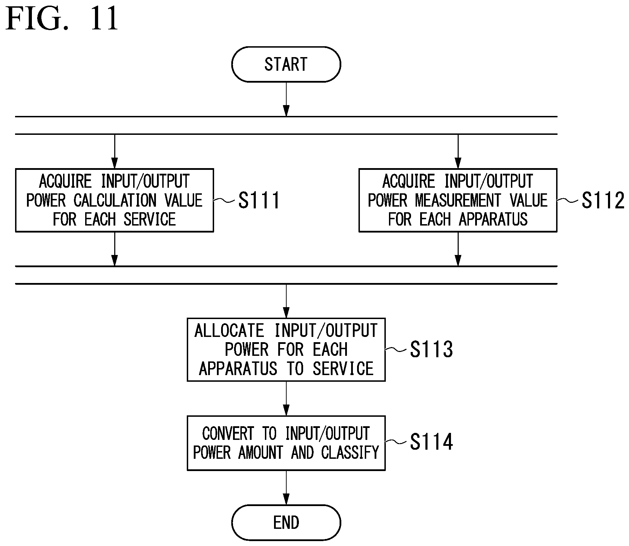

FIG. 11 is a flowchart showing the first example of the processing procedure in which the classification processing unit 293 calculates the details of the service execution amount. FIG. 11 shows an example in which the classification processing unit 293 uses a calculation value (command value) as the input/output power for each service. The classification processing unit 293 performs the processing of FIG. 11 in Step S15 of FIG. 11.

In the process of FIG. 11, the classification processing unit 293 acquires the input/output power calculation value (command value) for each service (Step S111). Specifically, the classification processing unit 293 uses the input/output power command value for each service acquired by the input/output power determination unit 291 in Step S11 of FIG. 10.

Further, the classification processing unit 293 acquires the input/output power measurement value for each power supply apparatus (Step S112). For example, in the case of FIG. 2, the classification processing unit 293 acquires the measurement values of each power of P21, P22, and P23.

Then, the classification processing unit 293 allocates the input/output power for each power supply apparatus to the service (Step S113). Specifically, the classification processing unit 293 allocates input/output power for each power supply apparatus and each power attribute to the service in accordance with a predetermined policy.

Moreover, the classification processing unit 293 converts the calculated input/output power into a power amount, and further classifies the converted power amount in more detail, for example, as in the combination of the classifications (A) to (E) described above (Step S114).

After Step S114, the classification processing unit 293 ends the processing of FIG. 11.

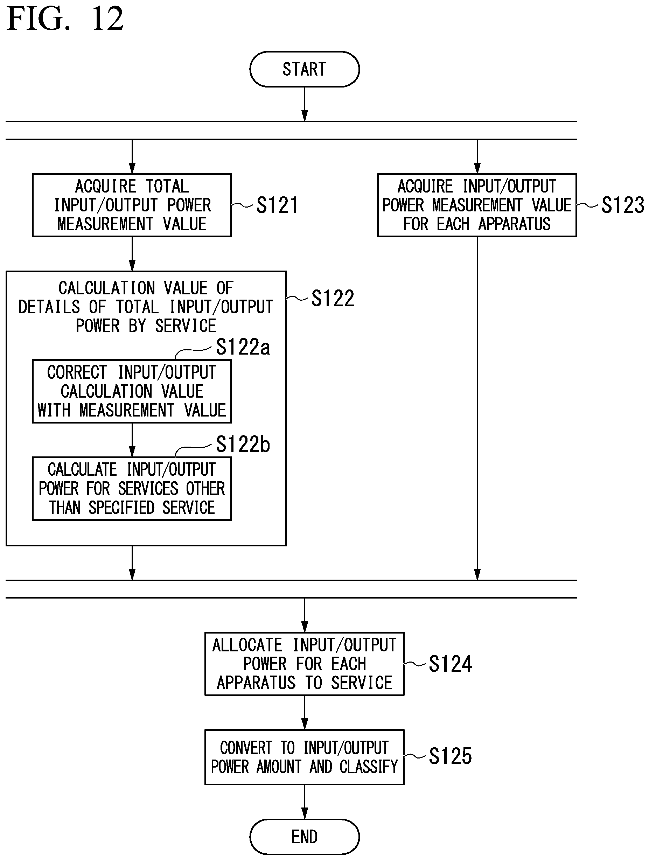

FIG. 12 is a flowchart showing a second example of the processing procedure in which the classification processing unit 293 calculates the details of the service execution amount. FIG. 12 shows an example in which the classification processing unit 293 uses the measurement value of the total input/output power to calculate the input/output power for each service. The classification processing unit 293 performs the processing of FIG. 12 in Step S15 of FIG. 10.

In the process of FIG. 12, the classification processing unit 293 acquires the total input/output power measurement value (Step S121). For example, in the case of FIG. 2, the classification processing unit 293 acquires the measurement value of the power of P11.

Then, the classification processing unit 293 calculates the details of the total input/output power by service (Step S122).

At this time, there is a possibility that an error may occur between the total power command value as a result of adding up the input/output power command values for each service and the total input/output power measurement value. In such a case, the input/output power calculation value (= command value) of each service is made a value corrected with the measurement value (Step S122a). For example, if the total power command value is 1000 W and the total input/output power measurement value is 998 W, there is considered to be a technique of correcting the input/output power calculation value for each service to a value 998/1000 times by proportional distribution. Subsequently, using the corrected input/output power calculation value (command value) of the service, for example, the classification processing unit 293 calculates the input/output power of the remaining services by excluding the (adding/subtracting) the input/output power calculation value (command value) of the specified service from the total input/output power (Step S122b), such as the calculation of the power sold as described with reference to FIGS. 5 to 9.

Step S123 is the same as Step S112 in FIG. 11. Further, steps S124 and S125 are the same as steps S113 and S114 in FIG. 11.

After Step S125, the classification processing unit 293 ends the processing of FIG. 12.

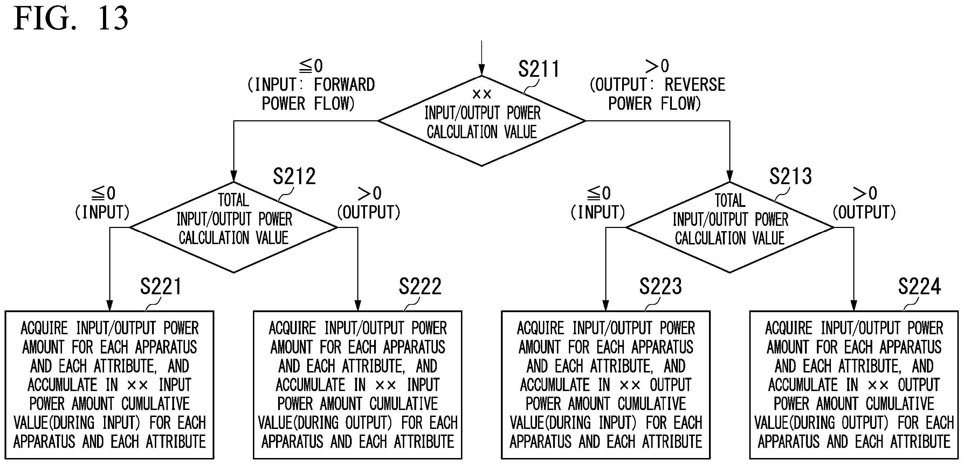

FIG. 13 is a diagram showing an example of a processing procedure in which the classification processing unit 293 and the service recording unit 294 calculate and record the details of the execution amount of each service. The classification processing unit 293 performs the processing of FIG. 13 in Step S15 of FIG. 10. Further, in relation to FIG. 11, the process of FIG. 13 corresponds to an example of a more detailed classification in Step S114. In relation to FIG. 12, the process of FIG. 13 corresponds to an example of a more detailed classification in Step S125.

"xx" in FIG. 13 indicates a service name.

In the process of FIG. 13, the classification processing unit 293 determines whether the input/output power calculation value of the service to be processed is 0 or less (input = forward power flow) or greater than 0 (output = reverse power flow) (Step S211).

When it is determined that the input/output power calculation value of the service to be processed is 0 or less (Step S211: ≤0), the classification processing unit 293 determines whether the total input/output power calculation value is 0 or less (input = forward power flow) or greater than 0 (output = reverse power flow) (Step S212). The total input/output power measurement value may be used instead of the total input/output power calculation value.

When it is determined that the total input/output power calculation value is 0 or less (Step S212: ≤ 0), the classification processing unit 293 and the service recording unit 294 acquire the input/output power amount for each power supply apparatus and each attribute, and accumulate in a cumulative value in accordance with the classification (Step S221).

Specifically, the classification processing unit 293 allocates the input/output power of each power supply apparatus and each power attribute to the input/output power of the service to be processed, and then multiplies the allocated input/output power by the time to convert to the power amount.

Then, the classification processing unit 293 classifies the obtained power amount into the combination of the classifications (A) to (E) described above. In this case,

(A) the service depends on the service to be processed;
(B) the distinction between input/output of power in the service is input by Step S211;
(C) the distinction between the input/output of power with the power system 910 in the entire distributed power supply system 41 is input by Step S212;
(D) the power supply apparatus depends on the power supply apparatus allocated to the input/output power of the service to be processed; and
(E) the power attribute depends on the attribute of the input/output power of the service to be processed.

Then, the service recording unit 294 updates the input/output power amount cumulative value recorded by the storage unit 280 for each classification.

After Step S221, the classification processing unit 293 and the service recording unit 294 end the processing of FIG. 13.

On the other hand, when it is determined in Step S212 that the total input/output power calculation value is greater than 0 (Step S212: > 0), the classification processing unit 293 and the service recording unit 294 acquire the input/output power amount for each power supply apparatus and each attribute, and accumulate the input/output power amount in a cumulative value in accordance with the classification (Step S222).

Specifically, the classification processing unit 293 allocates the input/output power of each power supply apparatus and each power attribute to the input/output power of the service to be processed, and then multiplies the allocated input/output power by the time to convert to the power amount.

Then, the classification processing unit 293 classifies the obtained power amount into the combination of the classifications (A) to (E) described above. In this case,

(A) the service depends on the service to be processed;
(B) the distinction between input/output of power in the service is input by Step S211;
(C) the distinction between the input/output of power with the power system 910 in the entire distributed power supply system 41 is output by Step S212;
(D) the power supply apparatus depends on the power supply apparatus allocated to the input/output power of the service to be processed; and
(E) the power attribute depends on the input/output power attribute of the service to be processed.

Then, the service recording unit 294 updates the input/output power amount cumulative value recorded by the storage unit 280 for each classification.

After Step S222, the classification processing unit 293 and the service recording unit 294 end the processing of FIG. 13.

On the other hand, when it is determined in Step S211 that the input/output power calculation value of the service to be processed is greater than 0 (Step S211: > 0), the classification processing unit 293 determines whether the total input/output power calculation value is 0 or less (input = forward power flow) or greater than 0 (output = reverse power flow) (Step S213). The total input/output power measurement value may be used instead of the total input/output power calculation value.

When it is determined that the total input/output power calculation value is 0 or less (step S213: ≤ 0), the classification processing unit 293 and the service recording unit 294 acquire the input/output power amount for each power supply apparatus and each attribute, and accumulate the input/output power amount in a cumulative value in accordance with the classification (Step S223).

Specifically, the classification processing unit 293 allocates the input/output power of each power supply apparatus and each power attribute to the input/output power of the service to be processed, and then multiplies the allocated input/output power by the time to convert to the power amount.

Then, the classification processing unit 293 classifies the obtained power amount into the combination of the classifications (A) to (E) described above. In this case,

(A) the service depends on the service to be processed;
(B) the distinction between input/output of power in the service is output by Step S211;
(C) the distinction between the input/output of power with the power system 910 in the entire distributed power supply system 41 is input by Step S213;
(D) the power supply apparatus depends on the power supply apparatus allocated to the input/output power of the service to be processed; and
(E) the power attribute depends on the input/output power attribute of the service to be processed.

Then, the service recording unit 294 updates the input/output power amount cumulative value recorded by the storage unit 280 for each classification.

After Step S223, the classification processing unit 293 and the service recording unit 294 end the processing of FIG. 13.

On the other hand, when it is determined in Step S213 that the total input/output power calculation value is greater than 0 (Step S213: > 0), the classification processing unit 293 and the service recording unit 294 acquire the input/output power amount for each power supply apparatus and each attribute, and accumulate the input/output power amount in a cumulative value in accordance with the classification (step S224).

Specifically, the classification processing unit 293 allocates the input/output power of each power supply apparatus and each power attribute to the input/output power of the service to be processed, and then multiplies the allocated input/output power by the time to convert to the power amount.

Then, the classification processing unit 293 classifies the obtained power amount into the combination of the classifications (A) to (E) described above. In this case,

(A) the service depends on the service to be processed;
(B) the distinction between input/output of power in the service is output by Step S211;
(C) the distinction between the input/output of power with the power system 910 in the entire distributed power supply system 41 is output by Step S213;
(D) the power supply apparatus depends on the power supply apparatus allocated to the input/output power of the service to be processed; and
(E) the power attribute depends on the input/output power attribute of the service to be processed.

Then, the service recording unit 294 updates the input/output power amount cumulative value recorded by the storage unit 280 for each classification.

After Step S224, the classification processing unit 293 and the service recording unit 294 end the processing of FIG. 13.

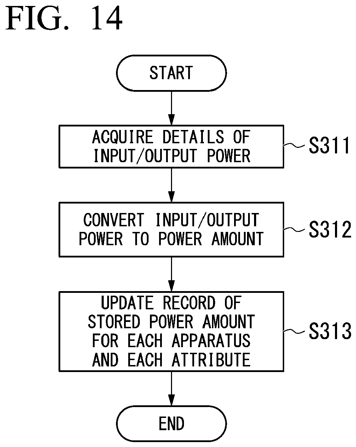

FIG. 14 is a flowchart showing an example of a processing procedure in which the power storage information processing unit 295 calculates the stored power amount for each power attribute of a power supply apparatus that can be charged and discharged. The power storage information processing unit 295 performs the process of FIG. 14 in Step S17 of FIG. 10.

In the process of FIG. 14, the power storage information processing unit 295 acquires the details of the input/output power of the power supply apparatus that can be charged and discharged (Step S311). Specifically, for each power supply apparatus capable of being charged and discharged, the power storage information processing unit 295 acquires the input/output power for each power supply apparatus and for each power attribute calculated by the classification processing unit 293 in Step S15 of FIG. 10.

Then, the power storage information processing unit 295 multiplies the obtained input/output power by the time to convert to the power amount (Step S312). When a plurality of input/output powers are acquired in Step S311, the classification processing unit 293 converts each of the obtained input/output powers into a power amount.

Then, the power storage information processing unit 295 causes the obtained power amount to be reflected in the stored power amount stored by the storage unit 280 for each power supply apparatus that can be charged and discharged and for each power attribute (Step S313). Even when there are multiple power supply apparatuses of the same type that can be charged and discharged, the storage unit 280 stores the stored power amount for each power supply apparatus and for each power attribute, and the power storage information processing unit 295 performs the process of Step S313 for each power supply apparatus and each power attribute. For example, when one distributed power supply system 41 is provided with a plurality of storage batteries 12, an ID (identifier) may be assigned to each of the storage batteries 12 to distinguish the plurality of storage batteries 12.

However, when one distributed power supply system 41 includes a plurality of electric vehicles 13 having different IDs, or when managing the charging/discharging in accordance with the connection of electric vehicles having different IDs, the power storage information processing unit 295 may perform a process slightly different from the above. First, when the electric vehicle is connected to the power conditioning system 21, the power storage information processing unit 295, after distinguishing the electric vehicle 13 by the ID of the electric vehicle 13, collects information on the amount of power stored for each power attribute from a power storage state storage unit (not shown) on the electric vehicle 13 side, and then performs the processes of Steps S311 to S313 above with that information as the initial value. Further, when the power storage information processing unit 295 has updated the power storage information for each power attribute in Step S313, the power storage information processing unit 295 also transmits the information to the power storage state storage unit on the electric vehicle side to update the information.

After Step S313, the power storage information processing unit 295 ends the process of FIG. 14.

As described above, the classification processing unit 293 classifies and calculates, for each of a plurality of power supply apparatuses, the details of the input/output power in a service carried out using at least one of the plurality of power supply apparatuses. The service recording unit 294 records, for each classification by the classification processing unit 293, the details of the amount of power input/output as a result of the execution of the service.

As a result, the power conditioning system 21 can show the correspondence relation of which power is provided to a service. According to the power conditioning system 21, it is for example possible to calculate the consideration such as applying the green power tariff system to the sale of green power generated by the photovoltaic cell 11.

Further, the classification processing unit 293 classifies and calculates, for each service and for each power supply apparatus, the details of the input/output power in the plurality of services performed using any one or more of the plurality of power supply apparatuses.

Thereby, the power conditioning system 21 can support the implementation of a plurality of services, and can show the correspondence relation of which power is provided to which service.

Further, the classification processing unit 293 classifies and calculates, for each service, each power supply apparatus, and each power attribute based on the power generation scheme, the input/output power for at least some of the services.

For example, for power sales, the power conditioning system 21 can more reliably charge in accordance with the attribute of the power, such as calculating the tariff in accordance with whether it is green power or normal power.

Further, the classification processing unit 293 preferentially allocates to a service in which the attribute of the power is reflected as the added value a power having the attribute corresponding to the added value among the powers from power supply apparatuses, to calculate the input/output power of each classification.

As a result, the consumer can obtain a consideration (non-fossil value) that reflects the attributes of power such as green power on the basis of the allocation result of the classification processing unit 293.

Further, the power storage information processing unit 295 calculates the stored power amount of a power supply apparatus that can store power for each attribute of the power used for charging.

As a result, in the power conditioning system 21, among the output powers from chargeable and dischargeable power supply apparatuses such as the storage battery 12 and the electric vehicle 13, it becomes possible to calculate the consideration in accordance with the attribute of the power, such as applying a green power tariff system to power in which green power is stored.

Further, the classification processing unit 293 calculates the input/output power for each classification based on the command value of the input/output power.

As a result, the classification processing unit 293 can calculate the input/output power for each classification using the command value of the input/output power even if there is an input/output power for which the measurement value cannot be obtained.

Further, the classification processing unit 293 calculates the input/output power for each classification on the basis of the measurement value of the input/output power.

Thereby, even if an error arises between the command value of the input/output power and the actual input/output power, the classification processing unit 293, by using the measurement value of the input/output power, can obtain a more accurate input/output power in accordance with the actual input/output power.

<Second Example Embodiment>

In the second example embodiment, a case will be described in which the power control system includes a DC distribution network. The consumer installation system and the like according to the second example embodiment can transfer power without going through an AC/DC converter by exchanging power via the DC distribution network, and so the power loss is reduced accordingly.

Further, in the power control system according to the second example embodiment, when the AC distribution network has a power failure, the AC distribution network is cut off at an appropriate interconnection point, and by utilizing the DC distribution network, uninterruptible power becomes possible within the area below the cutoff point (within the area including the minimum AC network in the facility and the DC distribution network).

Further, while high-voltage power transmission is performed in order to reduce power losses in the power transmission path in the case of long-distance power transmission, in the case of a short power transmission distances, the power loss is relatively small even in low-voltage power transmission. Since the power control system according to the second example embodiment is provided with a local DC distribution network, low-voltage power transmission is possible, and power transmission can be performed relatively safely.

In the second example embodiment, reference signs that are the same as in the case of the first example embodiment are used for those parts corresponding to the first example embodiment. Further, regarding the second example embodiment, detailed descriptions of parts that are the same as those of the first example embodiment will be omitted, with the differences from the first example embodiment being described.

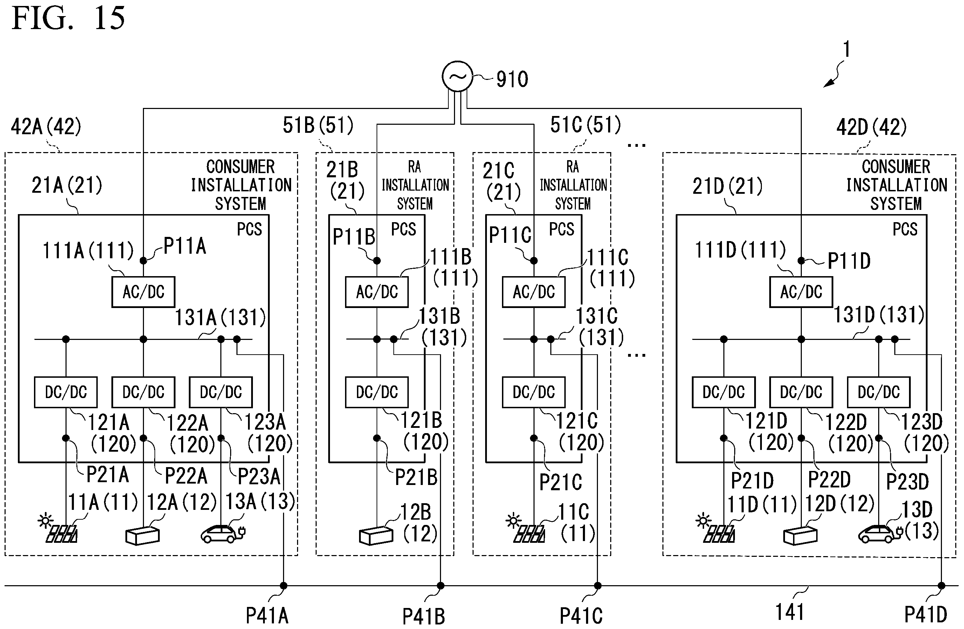

FIG. 15 is a diagram showing an example of the first mode of installation of the DC distribution network in the power control system 1. FIG. 15 shows an example in which the DC/DC converter of the power conditioning system 21 is also used for connection to a DC distribution network.

FIG. 15 shows consumer installation systems 42A and 42D and resource aggregator installation systems 51B and 51C, which are connected to both the power system 910 and a DC distribution network 141, respectively.

The topology of the DC distribution network 141 is not limited to a specific topology. For example, the topology of the DC distribution network 141 may be, but is not limited to, a bus type, a ring type, or a mesh type.

Both the consumer installation systems 42A and 42D correspond to the example of the consumer installation system 42.

The consumer installation system 42A is provided with a power conditioning system 21A, a photovoltaic cell 11A, a storage battery 12A, and an electric vehicle 13A. The power conditioning system 21A corresponds to an example of the power conditioning system 21. The photovoltaic cell 11A corresponds to an example of the photovoltaic cell 11. The storage battery 12A corresponds to an example of the storage battery 12. The electric vehicle 13A corresponds to an example of the electric vehicle 13.

The power conditioning system 21A is provided with an AC/DC converter 111A, a DC/DC converter 121A, a DC/DC converter 122A, a DC/DC converter 123A, and a DC bus 131A. The AC/DC converter 111A corresponds to an example of the AC/DC converter 111. The DC/DC converter 121A, the DC/DC converter 122A, and the DC/DC converter 123A all correspond to examples of the DC/DC converter 120. The DC bus 131A corresponds to an example of the DC bus 131.

The power on the AC end side of the AC/DC converter 111A is denoted as "P11A". The power on the outer end side of the DC/DC converter 121A is denoted as "P21A". The power on the outer end side of the DC/DC converter 122A is denoted as "P22A". The power on the outer end side of the DC/DC converter 123A is denoted as "P23A".

The DC bus 131A is connected to the DC distribution network 141. The voltage at the connection point where the DC bus 131A is connected to the DC distribution network 141 is denoted as "P41A".

The consumer installation system 42D is provided with a power conditioning system 21D, a photovoltaic cell 11D, a storage battery 12D, and an electric vehicle 13D. The power conditioning system 21D corresponds to an example of the power conditioning system 21. The photovoltaic cell 11D corresponds to an example of the photovoltaic cell 11. The storage battery 12D corresponds to an example of the storage battery 12. The electric vehicle 13D corresponds to an example of the electric vehicle 13.

The power conditioning system 21D is provided with an AC/DC converter 111D, a DC/DC converter 121D, a DC/DC converter 122D, a DC/DC converter 123D, and a DC bus 131D. The AC/DC converter 111D corresponds to an example of the AC/DC converter 111. The DC/DC converter 121D, the DC/DC converter 122D, and the DC/DC converter 123D all correspond to examples of the DC/DC converter 120. The DC bus 131D corresponds to an example of the DC bus 131.

The power on the AC end side of the AC/DC converter 111D is denoted as "P11D". The power on the outer end side of the DC/DC converter 121D is denoted as "P21D". The power on the outer end side of the DC/DC converter 122D is denoted as "P22D". The power on the outer end side of the DC/DC converter 123D is denoted as "P23D".

The DC bus 131D is connected to the DC distribution network 141. The voltage at the connection point where the DC bus 131D is connected to the DC distribution network 141 is referred to as "P41D".

The resource aggregator installation systems 51B and 51C are collectively referred to as the resource aggregator installation system 51. The resource aggregator installation system 51 is a system belonging to the resource aggregator and supplies power.

The resource aggregator installation system 51B is provided with a power conditioning system 21B and a storage battery 12B. The power conditioning system 21B corresponds to the example of the power conditioning system 21. The storage battery 12B corresponds to the example of the storage battery 12.

The power conditioning system 21B is provided with an AC/DC converter 111B, a DC/DC converter 121B, and a DC bus 131B. The AC/DC converter 111B corresponds to an example of the AC/DC converter 111. The DC/DC converter 121B corresponds to an example of the DC/DC converter 120. The DC bus 131B corresponds to an example of the DC bus 131.

The power on the AC end side of the AC/DC converter 111B is denoted as "P11B". The power on the outer end side of the DC/DC converter 121B is denoted as "P21B".

The DC bus 131B is connected to the DC distribution network 141. The voltage at the connection point where the DC bus 131B is connected to the DC distribution network 141 is denoted as "P41B".

The resource aggregator installation system 51C is provided with a power conditioning system 21C and a photovoltaic cell 11C. The power conditioning system 21C corresponds to an example of the power conditioning system 21. The photovoltaic cell 11C corresponds to an example of the photovoltaic cell 11.

The power conditioning system 21C is provided with an AC/DC converter 111C, a DC/DC converter 121C, and a DC bus 131C. The AC/DC converter 111C corresponds to an example of the AC/DC converter 111. The DC/DC converter 121C corresponds to an example of the DC/DC converter 120. The DC bus 131C corresponds to an example of the DC bus 131.

The power on the AC end side of the AC/DC converter 111C is denoted as "P11C". The power on the outer end side of the DC/DC converter 121C is denoted as "P21C".

The DC bus 131C is connected to the DC distribution network 141. The voltage at the connection point where the DC bus 131C is connected to the DC distribution network 141 is denoted as "P41C".

The resource aggregator installation system 51C is, for example, a mega solar, and outputs the power generated by photovoltaic power generation. As described above, the power control system 1 may include a system such as the resource aggregator installation system 51C that outputs (transmits) power but does not input (receive) power.

A system that transmits or receives power in the power control system 1 or performs both is referred to as a node of the power control system 1 or simply a node. The consumer installation systems 42A and 42D and the resource aggregator installation systems 51B and 51C all correspond to examples of nodes.

The nodes of the power control system 1 may include a node that is not equipped with a power supply apparatus.

Further, while the number and configuration of the nodes of the power control system 1 are not limited to a specific number and configuration, and it is sufficient that nodes capable of transmitting power to other nodes via the DC distribution network 141 and nodes capable of receiving power transmitted via the DC distribution network 141. Further, the number and types of power supplies provided with nodes capable of transmitting power to other nodes via the DC distribution network 141 are not limited to a specific number and type.

In order to transmit power between nodes via the DC distribution network 141, a power transfer contract is concluded in advance between the node owners. By predetermining the value of the transmission power in the contract, it is possible to perform power control for executing the contract relatively easily. Hereinbelow, the value of power specified in a contract will be referred to as planned power. On the other hand, a contract is also conceivable in which the value of the transmission power is calculated on an as-you-go basis, such as when transmitting the power of photovoltaic power generation.

If necessary, the attributes of transmission power such as green power, the power supply apparatuses that are resources for power transmission, or both are specified in the contract.

To implement a contract, a node measures the power at the connection point between the node and the DC distribution network 141. The power conditioning system of that node performs power control (control of power supply apparatus and the like by controlling each converter, etc.) on the basis of the measurement value of power at the connection point.

The node may also acquire the measurement value of the power at the connection point between another node and the DC distribution network 141. For example, in the case of a contract in which the value of the transmission power is calculated on an as-you-go basis, the node on the power receiving side may acquire the measurement value of the power at the connection point between the transmitting side node and the DC distribution network 141 as the transmission power value. In this case, the node on the power receiving side receives power corresponding to the transmission power value from the DC distribution network 141.

When the DC bus 131 of the power conditioning system 21 is connected to the DC distribution network 141 as in the example of FIG. 15, the apparatus control unit 292 of the power conditioning system 21 controls the input/output of power between the power conditioning system 21 and the DC distribution network 141 by controlling the input/output of power in the DC bus 131.

Specifically, with regard to control of the input/output power between the power conditioning system 21 and the DC distribution network 141, the apparatus control unit 292 controls the input/output of power between each of the AC/DC converter 111 and the DC/DC converters 120 connected to the DC bus 131 and the DC bus 131 so that the difference between the power input to the DC bus 131 and the power output from the DC bus 131 is equal to a target value of the input/output power between the power conditioning system 21 and the DC distribution network 141. That is, with regard to the input/output of power in the DC bus 131 when a target value of the input/output power between the power conditioning system 21 and the DC distribution network 141 is included, the apparatus control unit 292 makes the total input power and the total output power equal.

The apparatus control unit 292 corresponds to an example of the power reception control means in that it controls the power reception from the DC distribution network 141. The apparatus control unit 292 also corresponds to an example of a power transmission control means in that it controls power transmission to the DC distribution network 141. Further, the apparatus control unit 292 corresponds to an example of a power transfer control means in that it controls power transfer with the DC distribution network 141.

When the value of the transfer power via the DC distribution network 141 is specified by a contract, that value can be used as the target value of the input/output power between the power conditioning system 21 and the DC distribution network 141.

Alternatively, when the value of the transmission power via the DC distribution network 141 is calculated on an as-you-go basis, the power conditioning system 21 of the node on the transmission side determines the value of the power output from the power conditioning system 21 to the DC distribution network 141 in accordance with the conditions specified in the contract. For example, in the case of a contract to transmit all the power generated by a photovoltaic cell of that node, the power conditioning system 21 of the node on the transmission side operates so as to output all the power generated by the photovoltaic cell of the node to the DC distribution network 141.

When the value of the transmission power through the DC distribution network 141 is calculated on an as-you-go basis, the power conditioning system 21 of the node on the power receiving side acquires the value of the transmission power by the node on the power transmission side to use as the target value of the input/output power between the power conditioning system 21 and the DC distribution network 141. The power conditioning system 21 of the node on the power receiving side uses the measurement value of the electrical state at the connection point between the node itself and the DC distribution network 141, or the measurement value of the electrical state at the connection point between the node on the power transmission side and the DC distribution network 141 to obtain the value of the transmission power by the node on the transmission side. For example, the node on the power receiving side may be equipped with a sensor installed at the connection point to measure any of current, potential (voltage), power, or a combination thereof at the connection point. Alternatively, if the real-time property of communication can be ensured, the node on the transmitting side may notify the node on the receiving side of the value of the transmission power.

The apparatus control unit 292 performs the aforementioned control on the basis of the input/output power of each power supply apparatus determined by the input/output power determination unit 291. The input/output power determination unit 291 determines the input/output power of each power supply apparatus so that the difference between the power input to the DC bus 131 and the power output from the DC bus 131 is equal to the target value of the input/output power between the power conditioning system 21 and the DC distribution network 141.

The input/output power determination unit 291 can calculate the input/output power of each power supply apparatus by treating the input/output power between the power conditioning system 21 and the DC distribution network 141 as the input/output power of the power supply apparatus with fixed input/output power. The fact that the input/output power of a power supply apparatus is determined is similar to the case where the generated power of the photovoltaic cell 11 is used as is as the output power of the photovoltaic cell 11.

For example, in the case of the consumer installation system 42A, the input/output power determination unit 291 may allocate the output power (predicted value) of the photovoltaic cell 11A and the input/output power (command value) between the power conditioning system 21A and the DC distribution network 141 to a service. Then, input/output power determination unit 291 may determine the input/output power of the storage battery 12A and the input/output power of the electric vehicle 13A so as to adjust the excess or deficiency of power in each service with the input/output power of the storage battery 12A and the input/output power of the electric vehicle 13A.

Even in the processing of the classification processing unit 293, the input/output power between the power conditioning system 21 and the DC distribution network 141 can be treated like the input/output power of the power supply apparatus whose input/output power is determined. For example, among the above-mentioned classifications in which the classification processing unit 293 calculates the details of the input/output power,

(A) service;
(B) distinction between power input/output in a service;
(C) distinction between power input/output with respect to power system 910 in the entire distributed power supply system 41
(D) power supply apparatus; and
(E) power attribute

a "DC distribution network" may be added to the classification "(D) power supply apparatus". The "DC distribution network" here indicates that the DC distribution network 141 is treated as if it were one power supply apparatus when viewed from the power conditioning system 21.

For example, in the case of the consumer installation system 42A, the classification of "(D) power supply apparatus" may be made the distinction between "photovoltaic cell 11A/storage battery 12A/electric vehicle 13A/DC distribution network 141".

In relation to "(E) Power attribute", the transmission side node transmits information indicating the power transmission attribute to the power receiving side node via the DC distribution network 141. At the node on the receiving side, the classification processing unit 293 determines the attribute of the power from the DC distribution network 141 using this information, and calculates the value of the power for each classification. At this time, the node on the power transmission side may transmit and receive not only the power attribute information (for example, information on whether or not it is green power) but also the node ID of the power transmission source. The node ID is information for identifying the node of the power control system 1, and further, is information for identifying the resource owner (node owner). In the exchange of power between different consumer facilities, it is necessary to associate the consumer information of the power transmission source with the information of the amount of power received, and the node ID can be used.

Information about a node or resource owner, such as a node ID, is called resource owner information.

When the service recording unit 294 records the transfer power via the DC distribution network 141, "DC power transfer" may be added to the classification of "(A) Service". DC power transmission is classified into "DC power transfer" of "(A) service" and "output" of "(B) distinction between power input/output in a service". DC power reception is classified into "DC power transfer" of "(A) service" and "input" of "(B) distinction between power input/output in a service".

Even in the processing of the service recording unit 294, the input/output power between the power conditioning system 21 and the DC distribution network 141 can be treated like the input/output power of a power supply apparatus whose input/output power is determined by recording the details of the amount of power input/output as a result of the execution of the service for each classification by the classification processing unit 293. For example, when the service recording unit 294 follows the above classification example, the classification of "(D) power supply apparatus" includes the "DC distribution network 141".

In the processing of the power storage information processing unit 295, the DC distribution network 141 can be treated like one power supply apparatus as a resource for charging power to a power supply apparatus that can store power.

For example, when the power conditioning system 21A of the consumer installation system 42A charges the storage battery 12A using the reception power from the DC distribution network 141, the power storage information processing unit 295 determines the transmission source node ID and whether or not the reception power from the DC distribution network 141 is green power using the information from the node on the transmission side. When the reception power from the DC distribution network 141 is green power, the power storage information processing unit 295 increases the record of the amount of stored power that is green power in the storage battery 12A by the amount of charging by the reception power from the DC distribution network 141. On the other hand, when the reception power from the DC distribution network 141 is normal power (power other than green power), the power storage information processing unit 295 increases the record of the amount of stored power that is normal power in the storage battery 12A by the amount of charging by the reception power from the DC distribution network 141. Then, the increased amount of power is associated with the node ID of the transmission source to prepare for the later billing process.

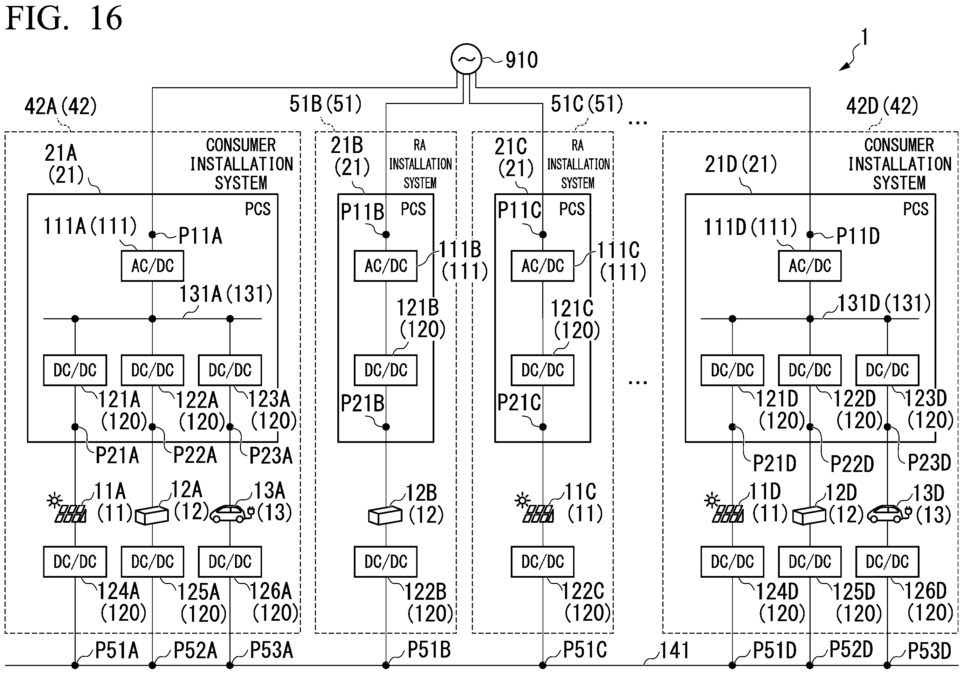

FIG. 16 is a diagram showing an example of the second mode of installation of the DC distribution network in the power control system 1. FIG. 16 illustrates the case of providing DC/DC converters for connection to a DC distribution network separately from the DC/DC converters of the power conditioning system 21, and connecting each of the DC/DC converters for connection to the DC distribution network to the DC distribution network.

The example of FIG. 16 differs from the example of FIG. 15 in that the DC/DC converter 120 is provided for each power supply apparatus separately from the DC/DC converters 120 of the power conditioning system 21, and each of the DC/DC converters 120 is connected to the DC distribution network 141. The example of FIG. 16 also differs from the example of FIG. 15 in that each of the DC busses 131 of the power conditioning system 21 is not connected to the DC distribution network 141. In other respects, the example of FIG. 16 is similar to the example of FIG. 15.

The DC/DC converter 120 connected to the photovoltaic cell 11A and the DC distribution network 141 is referred to as a DC/DC converter 124A. The voltage at the connection point where the DC/DC converter 124A is connected to the DC distribution network 141 is denoted as "P51A".

The DC/DC converter 120 connected to the storage battery 12A and the DC distribution network 141 is referred to as a DC/DC converter 125A. The voltage at the connection point where the DC/DC converter 125A is connected to the DC distribution network 141 is denoted as "P52A".

The DC/DC converter 120 connected to the electric vehicle 13A and the DC distribution network 141 is referred to as a DC/DC converter 126A. The voltage at the connection point where the DC/DC converter 126A is connected to the DC distribution network 141 is referred to as "P53A".

The DC/DC converter 120 connected to the storage battery 12B and the DC distribution network 141 is referred to as a DC/DC converter 122B. The voltage at the connection point where the DC/DC converter 122B is connected to the DC distribution network 141 is denoted as "P51B".

The DC/DC converter 120 connected to the photovoltaic cell 11C and the DC distribution network 141 is referred to as a DC/DC converter 122C. The voltage at the connection point where the DC/DC converter 122C is connected to the DC distribution network 141 is referred to as "P51C".

The DC/DC converter 120 connected to the photovoltaic cell 11D and the DC distribution network 141 is referred to as a DC/DC converter 124D. The voltage at the connection point where the DC/DC converter 124D is connected to the DC distribution network 141 is denoted as "P51D".

The DC/DC converter 120 connected to the storage battery 12D and the DC distribution network 141 is referred to as a DC/DC converter 125D. The voltage at the connection point where the DC/DC converter 125D is connected to the DC distribution network 141 is denoted as "P52D".

The DC/DC converter 120 connected to the electric vehicle 13D and the DC distribution network 141 is referred to as a DC/DC converter 126D. The voltage at the connection point where the DC/DC converter 126D is connected to the DC distribution network 141 is denoted as "P53D".

The power conditioning system 21 may also control each of the DC/DC converters 120 connected to the power supply apparatuses and the DC distribution network 141.

For example, the input/output power determination unit 291 of the power conditioning system 21 allocates the input power or the output power between the node itself and the DC distribution network 141 (planned value) to a power supply apparatus. Then, the input/output power determination unit 291 performs a calculation that takes the power loss in the DC/DC converter into consideration for the power allocated to the power supply apparatus to convert to the input/output power value of the power supply apparatus (command value).

As for the method in which the input/output power determination unit 291 determines the input/output power on the DC bus 131 side of the power supply apparatus, the method in the first example embodiment can be used. Specifically, the input/output power determination unit 291 may determine the input/output power of each power supply apparatus in accordance with a predetermined policy.

The apparatus control unit 292 controls each of the DC/DC converters on the power conditioning system 21 side and the DC/DC converters on the DC distribution network 141 side in accordance with the power determined by the input/output power determination unit 291.

Even in the mode of FIG. 16, the apparatus control unit 292 corresponds to an example of the power reception control means from the aspect of controlling the power received from the DC distribution network 141. The apparatus control unit 292 also corresponds to an example of a power transmission control means from the aspect of controlling power transmission to the DC distribution network 141. Further, the apparatus control unit 292 corresponds to an example of a power transfer control means from the aspect of controlling power transfer with the DC distribution network 141.

In the case of the mode of FIG. 16, the DC/DC converters on the power conditioning system 21 side and the DC/DC converters on the DC distribution network 141 side are controlled independently. That is, when 500 watts of power is input from the DC/DC converter 125A to the storage battery 12A and 300 watts of power is input from the DC/DC converter 122A to the storage battery 12A, these DC/DC converters 125A and 122A can perform independent charge control by controlling the current for different storage battery cells.

Note that for one power supply apparatus, if the power transfer on the DC distribution network 141 side and the power transfer on the power system 910 side are reversed with respect to power transmission and power reception, the power from the power receiving side may be distributed to the power transmitting side, with the difference being adjusted by the power supply apparatus.

For example, consider a case where 500 watts of power is input from the DC/DC converter 125A to the storage battery 12A, and 300 watts of power is output from the storage battery 12A to the DC/DC converter 122A. In this case, the apparatus control unit 292 may float-charge the storage battery 12A with 200 watts of the 500 watts of power from the DC/DC converter 125A, and output the remaining 300 watts of power to the DC/DC converter 122A.

Alternatively, consider a case where 300 watts of power is input from the DC/DC converter 125A to the storage battery 12A, and 500 watts of power is output from the storage battery 12A to the DC/DC converter 122A. In this case, the apparatus control unit 292 may output all 300 watts of power from the DC/DC converter 125A to the DC/DC converter 122A, and cause the storage battery 12A to discharge the shortage of 200 watts of power to the DC/DC converter 122A.

Accordingly, the power conditioning system 21 in some cases directly uses the power from the DC distribution network 141 for a service to the power system 910. Conversely, the power conditioning system 21 may output the power from the power system 910 to the DC distribution network 141. Even in such cases, the input/output power determination unit 291 determines the input/output of power of each power supply apparatus so as to satisfy the demand of the power attribute.

For example, consider the case where the input/output power determination unit 291 has decided to output 500 watts of green power from the storage battery 12A to the DC/DC converter 122A, and further outputs 300 watts of power from the DC/DC converter 125A to the storage battery 12A. In this case, the input/output power determination unit 291 confirms that the power input from the DC/DC converter 125A to the storage battery 12A is green power by referring to the notification from the node on the transmission side of the power to the DC distribution network 141, for example. Further, the input/output power determination unit 291 makes the determination to discharge 200 watts of green power from the storage battery 12A to the DC/DC converter 122A.

In the processing of the classification processing unit 293, the service recording unit 294, and the power storage information processing unit 295, the input/output power between the power conditioning system 21 and the DC distribution network 141 can be treated like the input/output power of a power supply apparatus whose input/output power is determined, similarly to the case of the example of FIG. 15.

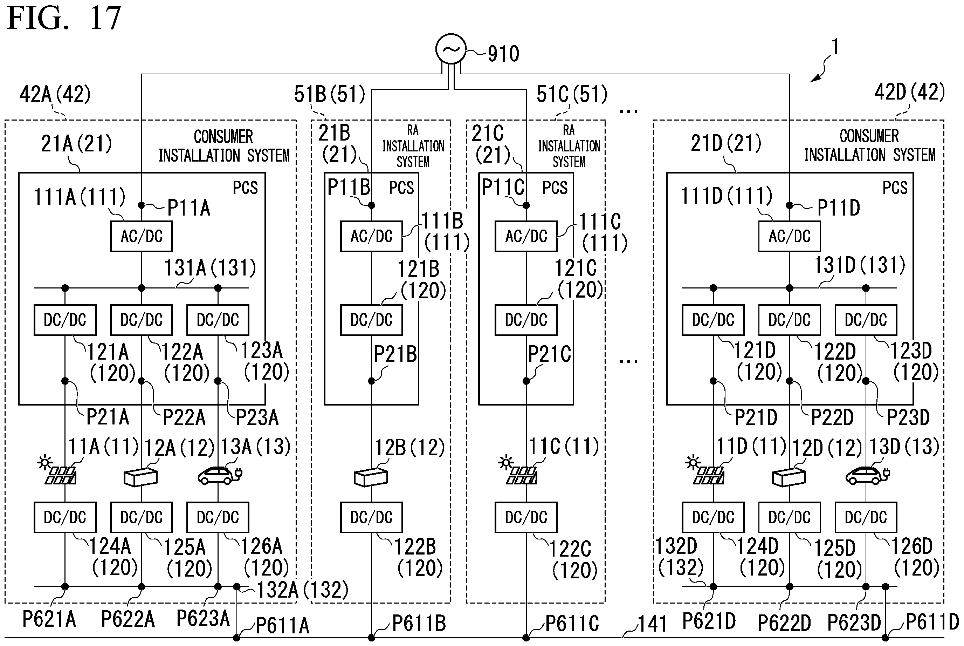

FIG. 17 is a diagram showing an example of a third mode of installation of a DC distribution network in the power control system 1. FIG. 17 shows an example of a case where DC/DC converters for connection to a DC distribution network is provided separately from the DC/DC converters of the power conditioning system 21, and a connection point to the DC distribution network is set to one for each node.

The example of FIG. 17 is different from the case of the example of FIG. 16 in that the connection point to the DC distribution network 141 is one for each node.

Specifically, in the consumer installation system 42A, the DC/DC converter 124A, the DC/DC converter 125A, and the DC/DC converter 126A are each connected to a DC bus 132A. The DC bus 132A is connected to the DC distribution network 141.

The power at the connection point between the DC/DC converter 124A and the DC bus 132A is denoted as "P621A". The power at the connection point between the DC/DC converter 125A and the DC bus 132A is denoted as "P622A". The power at the connection point between the DC/DC converter 126A and the DC bus 132A is referred to as "P623A". The power at the connection point between the DC bus 132A and the DC distribution network 141 is denoted as "P611A".

In the consumer installation system 42D, the DC/DC converter 124D, the DC/DC converter 125D, and the DC/DC converter 126D are each connected to a DC bus 132D. The DC bus 132D is connected to the DC distribution network 141.

The power at the connection point between the DC/DC converter 124D and the DC bus 132D is denoted as "P621D". The power at the connection point between the DC/DC converter 125D and the DC bus 132D is referred to as "P622D". The power at the connection point between the DC/DC converter 126D and the DC bus 132D is denoted as "P623D". The power at the connection point between the DC bus 132D and the DC distribution network 141 is denoted as "P611D".

Other than that, the example of FIG. 17 is the same as the example of FIG. 16.

The processing of the power conditioning system 21 in the mode of FIG. 17 is the same as that of the mode of FIG. 16. Similarly to the case of the mode of FIG. 16, in the mode of FIG. 17, the apparatus control unit 292 corresponds to the example of the power reception control means in that it controls the power reception from the DC distribution network 141. The apparatus control unit 292 also corresponds to an example of a power transmission control means in that it controls power transmission to the DC distribution network 141. Further, the apparatus control unit 292 corresponds to an example of a power transfer control means in that it controls power transfer to and from the DC distribution network 141.

However, in the mode of FIG. 17, due to the connection point between the node and the DC distribution network 141 being one for each node, the load of measurement and power calculation at the connection point can be smaller than in the case of the mode of FIG. 16 in which the connection point with the DC distribution network 141 is provided for each power supply apparatus.

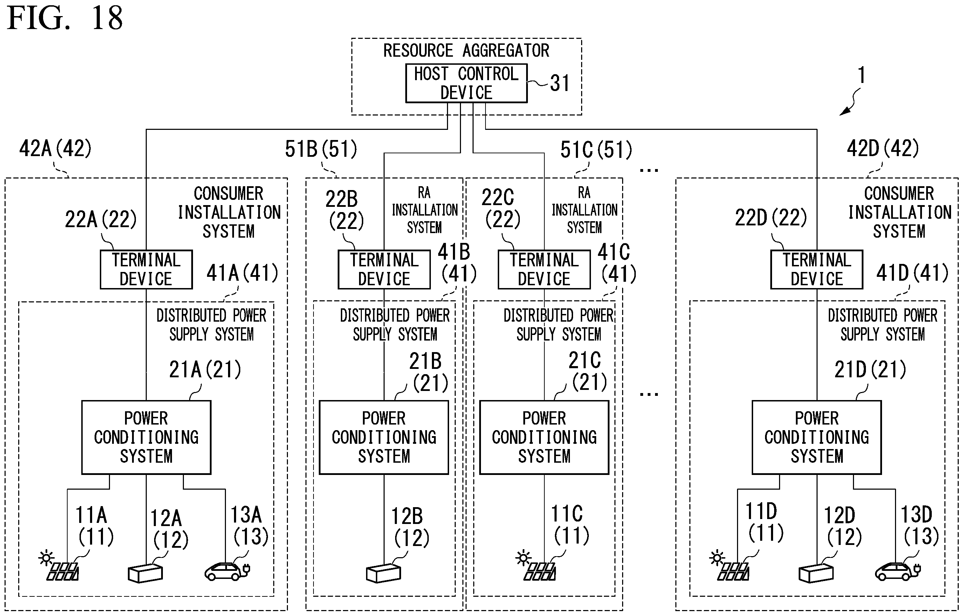

FIG. 18 is a diagram showing a configuration example of an information path in the power control system 1. The configuration of FIG. 18 can be used in any of the modes from FIGS. 15 to 17.

The example of FIG. 18 shows that each of the nodes of the consumer installation systems 42A and 42D and the resource aggregator installation systems 51B and 51C is provided with a terminal device 22 in addition to the power conditioning system 21 and the power supply apparatuses. The terminal device 22 included in the consumer installation system 42A is referred to as a terminal device 22A. The terminal device 22 included in the resource aggregator installation system 51B is referred to as a terminal device 22B. The terminal device 22 included in the resource aggregator installation system 51C is referred to as a terminal device 22C. The terminal device 22 included in the consumer installation system 42D is referred to as a terminal device 22D.

The distributed power supply system 41 of the consumer installation system 42A is referred to as a distributed power supply system 41A. The distributed power supply system 41 of the resource aggregator installation system 51B is referred to as a distributed power supply system 41B. The distributed power supply system 41 of the resource aggregator installation system 51C is referred to as a distributed power supply system 41C. The distributed power supply system 41 of the consumer installation system 42D is referred to as a distributed power supply system 41D.

In the configuration shown in FIG. 18, similarly to the configuration shown in FIG. 1, the host control device 31 is connected to the terminal devices 22, the terminal devices 22 are connected to the power conditioning systems 21, and the power conditioning systems 21 are connected to the power supply apparatuses. Using such a configuration, information relating to the transmission power via the DC distribution network 141 is exchanged between the power conditioning systems 21. The power conditioning system 21 on the power transmission side transmits, for example, the following information to the power conditioning system 21 on the power reception side via the terminal device 22 on the power transmission side, the host control device 31, and the terminal device 22 on the power reception side:

(1) Status information such as generated power or stored power amount of the power supply apparatus on the power transmission side;
(2) Information on the type of power supply apparatus on the power transmission side, such as the fact that the power supply apparatus on the power transmission side is a photovoltaic cell; and
(3) Attribute information of transmission power, such as whether or not the transmission power is green power.

In particular, the power conditioning system 21 on the power transmission side transmits information indicating the attribute of the transmission power to the power conditioning system 21 on the power reception side as described in (3) above.

For example, even if only green power is exchanged in the DC distribution network 141 basically, exchanging transmission power attribute information together with the attribute information of power is effective in confirming the transmission of green power. At this time, the power conditioning system 21 on the power transmission side may send and receive not only attribute information of power (for example, information on whether or not it is green power) but also information on who the resource owner of the power transmission source is (resource owner information such as the node ID). In the exchange of power between different consumer facilities, it is necessary to associate the consumer information of the transmission source with the information of the amount of power received, and so the node ID can be used.

Information transmitted from the power conditioning system 21 on the power transmission side to the power conditioning system 21 on the power reception side, such as power attribute information, the transmission power amount, resource owner information, or a combination thereof, is also referred to as power transfer related information.

The communication unit 210 of the power conditioning system 21 of the node on the power receiving side corresponds to an example of an acquisition means and receiving means in that it acquires (receives) information indicating the attribute of the reception power from the DC distribution network 141. The communication unit 210 of the power conditioning system 21 of the node on the power transmission side corresponds to an example of a transmission means in that it transmits information indicating the attribute of the transmission power to the DC distribution network 141.

The power conditioning system 21 provided with the apparatus control unit 292 and the communication unit 210 corresponds to an example of a control device. Further, the power conditioning system 21 corresponds to an example of the first control device by being provided with the apparatus control unit 292 corresponding to an example of the power transmission control means and the communication unit 210 corresponding to an example of the transmission means. Further, the power conditioning system 21 corresponds to an example of the second control device by being provided with the apparatus control unit 292 corresponding to an example of the power receiving control means and the communication unit 210 corresponding to an example of the receiving means.

However, the control device may be configured as a part of the power conditioning system 21 or may be configured as an external device in the power conditioning system 21.

Further, each node transmits the measurement value of the power at the connection point between the node itself and the DC distribution network 141 to another node. If the power cannot be measured, the control target value may be transmitted instead of the measurement value.

Alternatively, the power conditioning system 21 or the terminal device 22 may directly exchange power transfer related information with the power conditioning system 21 or the terminal device 22 of another node without going through the host control device.

Alternatively, instead of the power conditioning system 21, the terminal device 22 may manage the power transfer related information. In this case, the terminal device 22 on the power transmission side transmits power transfer related information to the terminal device 22 on the power reception side. At the node on the power receiving side, the power conditioning system 21 accesses the terminal device 22 and refers to power transfer related information.

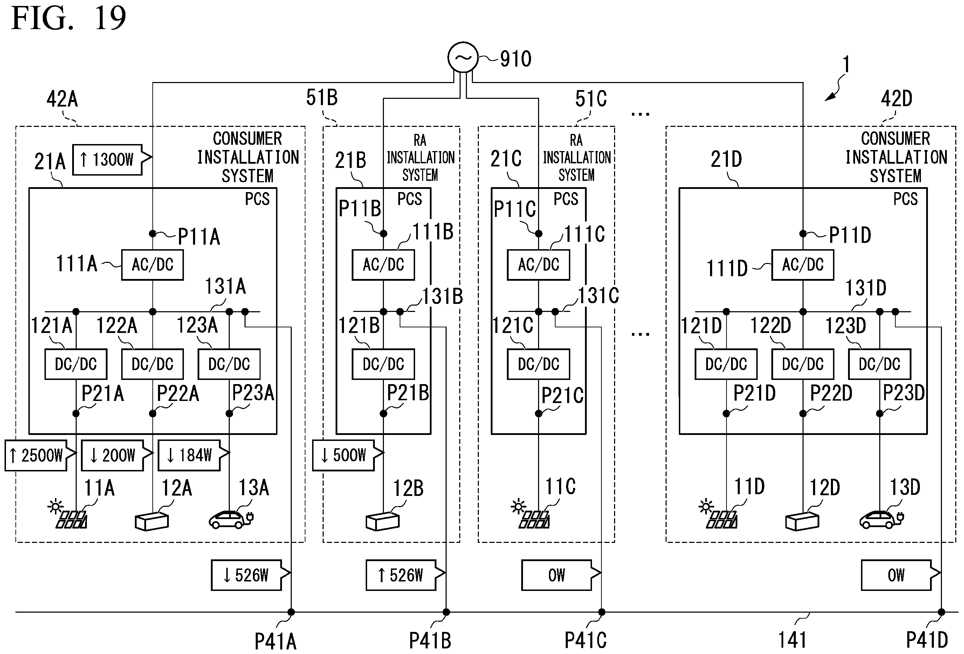

FIG. 19 is a diagram showing a first example of power exchange via the DC distribution network 141. FIG. 19 shows an example in which power is supplied from the consumer installation system 42A to the resource aggregator installation system 51B via the DC distribution network 141.

In the example of FIG. 19, the consumer of the consumer installation system 42A has a contract for power transmission to the resource aggregator of the resource aggregator installation system 51B, with the transmission power at the contact point between the resource aggregator installation system 51B and the DC distribution network 141 being P41B = 526 (watts). The power conditioning system 21A and the power conditioning system 21B control the respective apparatuses in each node to implement this contract.

Here, it is assumed that the distance between the connection point between the consumer installation system 42A and the DC distribution network 141 and the connection point between the resource aggregator installation system 51B and the DC distribution network 141 is short, and the power loss in the DC distribution network 141 can be ignored. Thus, it is assumed that the transmission power at the connection point between the consumer installation system 42A and the DC distribution network 141 is equal to the reception power at the connection point between the resource aggregator installation system 51B and the DC distribution network 141. The power conditioning system 21 controls the devices in the consumer installation system 42A so that the transmission power at the connection point between the consumer installation system 42A and the DC distribution network 141 is 526 watts.

In the example of FIG. 19, the total input/output power of the consumer installation system 42A is P11A = 1300 (watts) output (reverse power flow). Further, the output power of the photovoltaic cell 11A is P21A = 2500 (watts).

The input/output power determination unit 291 of the power conditioning system 21A allocates the remaining power obtained by subtracting the total input/output power and the output power to the resource aggregator installation system 51B from the output power of the photovoltaic cell 11A to the charging power of the storage battery 12A and the electric vehicle 13A. The input/output power determination unit 291 calculates the total of P22A and P23A to be 384 watts on the basis of Equation (20).

[Formula 20]

$$\left( 2500 \times 0.95 - \frac{1300}{0.9} - 526 \right) \times 0.95 \fallingdotseq 384 \qquad \cdots (20)$$

In the example of FIG. 19, out of the 384 watts, the input/output power determination unit 291 allocates 200 watts to the charging power (P22A) of the storage battery 12A and 184 watts to the charging power (P23A) of the electric vehicle 13A.

The apparatus control unit 292 of the power conditioning system 21A implements the transmission power P41B = 526 (watts) based on the contract by controlling the charging power of the storage battery 12A and the charging power of the electric vehicle 13A on the basis of the power determined by the input/output power determination unit 291.

In the resource aggregator installation system 51B, the total input/output power is P11B = 0 (watts). The power conditioning system 21B charges the storage battery 12B using the power from the consumer installation system 42A. The charging power (P21B) of the storage battery 12B is 526 × 0.95 ≈ 500 (watts).

Further, the classification processing unit 293 of the power conditioning system 21A calculates the details of each input/output power. In the example of FIG. 19, the power generated by the photovoltaic cell 11A is used for the output power to the power system 910 (P11A), the charging power of the storage battery 12A (P22A), the charging power of the electric vehicle 13A (P23A), and the transmission power to the resource aggregator installation system 51B (P41B (= P41A)). Therefore, the classification processing unit 293 calculates the attributes of these powers as green power.

Also in the example of FIG. 19, a plurality of services may be simultaneously performed for the output power to the power system 910, as in each of the examples of FIGS. 5 to 7. In that case, the classification processing unit 293 calculates the details of the input/output power for each service. For example, if 300 watts of the 1300 watts of the output power to the power system 910 (P11A) is the output power in the ancillary service and the remaining 1000 watts are power to be sold, the classification processing unit 293 calculate the power for each service. Then, the classification processing unit 293 calculates the attribute of the power being sold as green power. On the other hand, if the power attribute is not taken into consideration in the ancillary service, the classification processing unit 293 may not calculate the attribute for the ancillary service.

The service recording unit 294 of the power conditioning system 21A records the details of the amount of input/output power of the service executed by the consumer installation system 42A for each classification by the classification processing unit 293.

Further, the power storage information processing unit 295 of the power conditioning system 21A updates the record of the stored power amount of the storage battery 12A and the record of the stored power amount of the electric vehicle 13A. Specifically, the power storage information processing unit 295 increases the record of the stored power amount of green power in the storage battery 12A by the amount charged by the power from the photovoltaic cell 11. The power storage information processing unit 295 also increases the record of the stored power amount of green power in the electric vehicle 13A by the amount charged by the power from the photovoltaic cell 11.

Further, the power conditioning system 21A outputs information regarding the transmission power to the resource aggregator installation system 51B to the power conditioning system 21B. The information regarding the transmission power include, for example, information on who the resource owner of the transmission source is, information on the amount of transmission power, and information on the power attribute. The aforementioned power transfer related information corresponds to an example of the information regarding transmission power.

For example, the power conditioning system 21A transmits information regarding the transmission power to the resource aggregator installation system 51B to the terminal device 22A. The terminal device 22A transmits (transfers) the information regarding the transmission power to the resource aggregator installation system 51B to the terminal device 22B directly or via the host control device 31. The terminal device 22B transmits (transfers) information regarding the transmission power from the consumer installation system 42A to the resource aggregator installation system 51B to the power conditioning system 21B.

The power conditioning system 21B updates the record of the stored power amount of the storage battery 12B on the basis of the received information regarding the transmission power from the consumer installation system 42A to the resource aggregator installation system 51B. In the example of FIG. 19, the information received by the power conditioning system 21B as information regarding the transmission power from the consumer installation system 42A to the resource aggregator installation system 51B includes information indicating that the power attribute is green power. The classification processing unit 293 of the power conditioning system 21B calculates the stored power of the storage battery 12B as green power on the basis of this information. The power storage information processing unit 295 of the power conditioning system 21B increases the record of the stored power amount of green power in the storage battery 12B by the amount charged by the power from the consumer installation system 42A.

Nodes other than the power transmission side node and the power reception side node in the contract may set the input/output power to the DC distribution network 141 to 0 (0 watts). In the example of FIG. 19, the resource aggregator installation system 51C and the consumer installation system 42D correspond to nodes other than the transmission side node and the power reception side node in the contract. In the resource aggregator installation system 51C, the power conditioning system 21C controls the AC/DC converter 111C and the DC/DC converter 121C so that the power at the connection point between the resource aggregator installation system 51C and the DC distribution network 141 becomes P41C = 0 (watts). In the consumer installation system 42D, the power conditioning system 21D controls the AC/DC converter 111D, the DC/DC converter 121D, the DC/DC converter 122D and the DC/DC converter 123D so that the power at the connection point between the consumer installation system 42D and the DC distribution network 141 is P41D = 0 (watts).

As a result, all the power output to the DC distribution network 141 by the node on the power transmission side in the contract is received by the node on the power reception side. It is sufficient that both the node on the power transmission side and the node on the power reception side systematically control the apparatuses in accordance with the contract, whereby the contract can be executed relatively easily. Further, since only the power from the node on the transmission side in the contract is transmitted by the DC distribution network 141, it is easy to ascertain the attribute of the power.

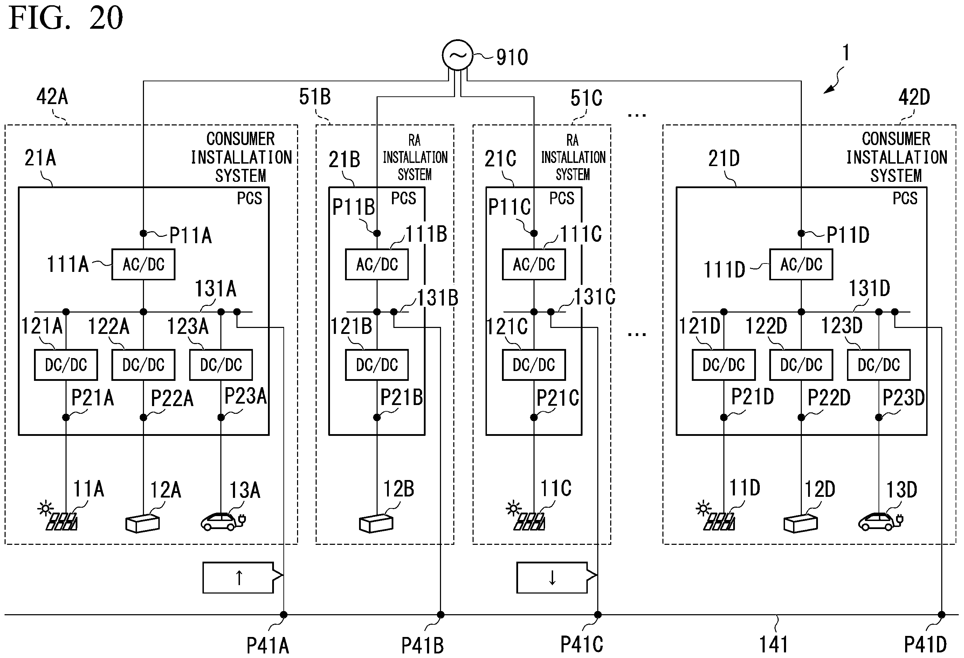

FIG. 20 is a diagram showing a second example of power exchange via the DC distribution network 141. FIG. 20 shows an example of supplying power from the resource aggregator installation system 51C to the consumer installation system 42A via the DC distribution network 141.

In the example of FIG. 20, the resource aggregator of the resource aggregator installation system 51C is contracted for power transmission via the DC distribution network 141. The power conditioning system 21C and the power conditioning system 21A control the devices in each node to implement this contract.

When the resource aggregator installation system 51C outputs the generated power of the photovoltaic cell 11C, various allocations can be defined in the contract regarding the allocation between the output to the power system 910 and the output to the DC distribution network 141.

For example, the power conditioning system 21C may output all the generated power of the photovoltaic cell 11C to the DC distribution network 141. Alternatively, the power conditioning system 21C may apportion the generated power of the photovoltaic cell 11C to the power system 910 and the DC distribution network 141 at a predetermined ratio. Alternatively, the power conditioning system 21C may output a predetermined amount of the generated power of the photovoltaic cell 11C to the power system 910 side and output the remaining power to the DC distribution network 141 side. Alternatively, the power conditioning system 21C may output a predetermined power of the generated power of the photovoltaic cell 11C to the DC distribution network 141 side and output the remaining power to the power system 910 side.

Alternatively, the consumer installation system 42A, which is the power receiving side, may determine the reception power. For example, the power conditioning system 21A of the consumer installation system 42A may measure the power P41A at the connection point between the consumer installation system 42A and the DC distribution network 141, and determine the reception power in consideration of the states of the photovoltaic cell 11A, the storage battery 12A, and the electric vehicle 13A.

In the consumer installation system 42A, the power from the resource aggregator installation system 51C may be directly consumed by a power consumption apparatus such as an air conditioner in the consumer installation system 42A without being received by the storage battery 12A or the electric vehicle 13A. Thereby, the storage battery 12A or the electric vehicle 13A is not subject to double DC/DC conversion losses during charging and discharging, and in this respect, efficient use of the power becomes possible.

The power conditioning system 21A can handle the reception power from the DC distribution network 141 as if it were the output power of another power supply apparatus in the consumer installation system 42A.

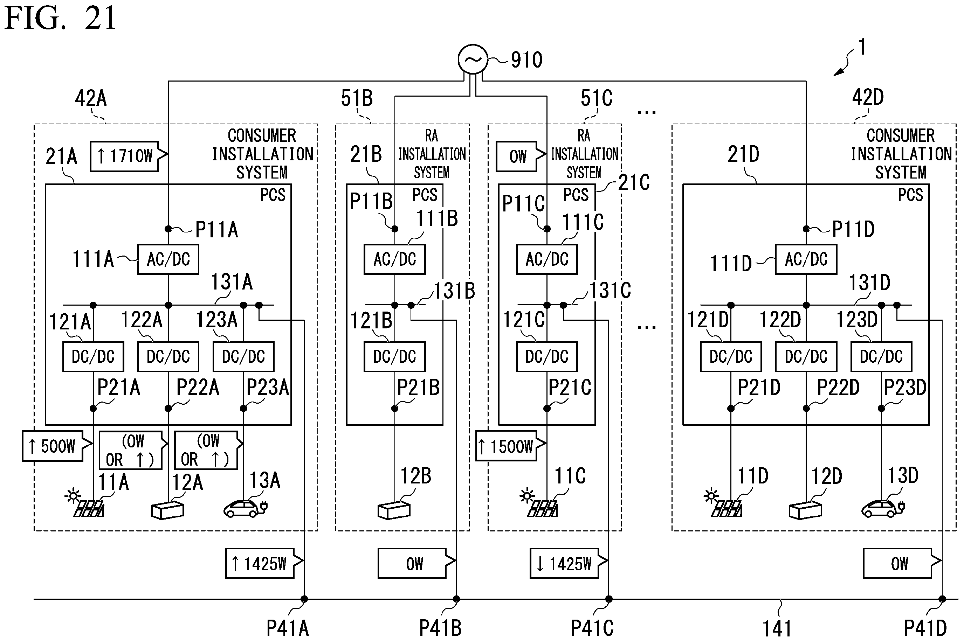

FIG. 21 is a diagram showing a third example of power exchange via the DC distribution network 141. FIG. 21 shows a more specific example of the example of FIG. 20. In the example of FIG. 21, the resource aggregator installation system 51C is contracted to transmit all the generated power of the photovoltaic cell 11C to the consumer installation system 42A through the DC distribution network 141, with the output power from the resource aggregator installation system 51C to the power system 910 being P11C = 0 (watts). In the example of FIG. 21, the photovoltaic cell 11C outputs P21C = 1500 (watts) of power. Due to the power loss in the DC/DC converter 121C, the transmission power at the connection point between the resource aggregator installation system 51C and the DC distribution network 141 is P41C = 1425 (watts). The power loss in the DC distribution network 141 is negligibly small, and the transmission power at the connection point between the consumer installation system 42A and the DC distribution network 141 is also P41A = 1425 (watts).

The generated power of the photovoltaic cell 11A is P21A = 500 (watts). The AC power that can be consumed in the consumer installation system 42A is P11A = 1710 (watts) as shown in Equation (21).

[Formula 21]

$$(1425 + 500 \times 0.95) \times 0.9 = 1710 \qquad \cdots (21)$$

When the power consumption by a power consumption apparatus in the consumer installation system 42A is less than 1710 watts, the power conditioning system 21A may charge the storage battery 12A or the electric vehicle 13A with the remaining power so that self-consumption reaches 100%. In this case, the power storage information processing unit 295 of the power conditioning system 21A records the stored power as green power on the basis of the information from the power conditioning system 21C.

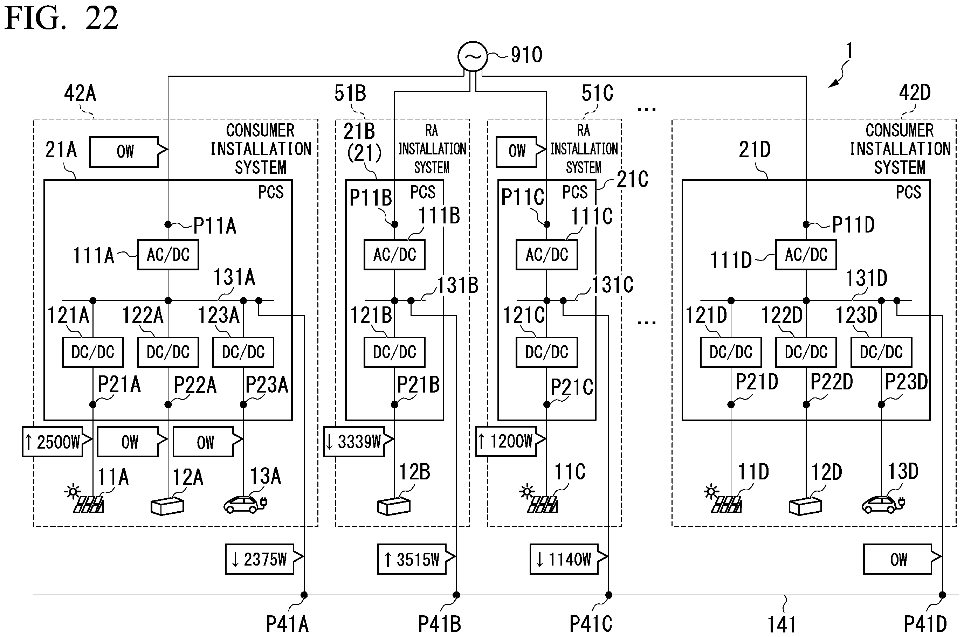

FIG. 22 is a diagram showing a fourth example of power exchange via the DC distribution network 141. FIG.

22 shows an example in which a plurality of nodes transmit power to one node via the DC distribution network 141. In the example of FIG. 22, the consumer installation system 42A and the resource aggregator installation system 51C transmit power to the resource aggregator installation system 51B via the DC distribution network 141.

Based on a contract, the consumer installation system 42A transmits all the power generated by the photovoltaic cell 11A to the resource aggregator installation system 51B on an as-you-go basis. In the example of FIG. 22, the photovoltaic cell 11A is outputting 2500 watts of power. The output power (P11A) from the consumer installation system 42A to the power system 910, the charging power (P12A) of the storage battery 12A, and the charging power (P13A) of the electric vehicle 13 are all 0, and the power conditioning system 21A outputs all the generated power of the photovoltaic cell 11A to the DC distribution network 141. Due to the loss in the DC/DC converter 121A, the power at the connection point between the consumer installation system 42A and the DC distribution network 141 is P41A = 2375 (watts).

Based on the contract, the resource aggregator installation system 51C transmits all the power generated by the photovoltaic cell 11C to the resource aggregator installation system 51B on an as-you-go basis. In the example of FIG. 22, the photovoltaic cell 11C outputs 1200 watts of power. The output from the resource aggregator installation system 51C to the power system 910 is P11C = 0 (watts), and the power conditioning system 21C outputs all the power generated by the photovoltaic cell 11C to the DC distribution network 141. Due to the loss in the DC/DC converter 121C, the power at the connection point between the resource aggregator installation system 51C and the DC distribution network 141 is P41C = 1140 (watts).

The power conditioning system 21B of the resource aggregator installation system 51B receives the power output by the consumer installation system 42A to the DC distribution network 141 and the power output by the resource aggregator installation system 51C to the DC distribution network 141 to charge the storage battery 12B. That is, the power conditioning system 21B receives power so that P41B = P41A + P41C. In the example of FIG. 22, P41B = 2375 + 1140 = 3515 (watts). Due to the loss in the DC/DC converter 121B, the charging power of the storage battery 12B is P21B = 3339 (watts).

From the viewpoint of responsiveness of control, the resource aggregator installation system 51B is preferably capable of measuring the power (P41A) or current at the connection point between the consumer installation system 42A and the DC distribution network 141, and the power (P41C) or current at the connection point between the resource aggregator installation system 51C and the DC distribution network 141. The power conditioning system 21B implements the contract by controlling the DC/DC converter 121B so that P41B = P41A + P41C using the obtained measured values.

If the resource aggregator installation system 51B cannot measure these powers or currents, the contract may be implemented assuming that the transmission power from the consumer installation system 42A to the resource aggregator installation system 51B is planned power. To this end, the value of the transmission power may be set to a constant value in the contract. In this case, the consumer installation system 42A adjusts the excess or shortage of power by charging and discharging the storage battery 12A or the electric vehicle 13A so that the transmission power (P41A (= 41B)) at the connection point between the consumer installation system 42A and the DC distribution network 141 becomes constant.

The contract may be set in advance to deal with cases where the need arises to output power other than green power from the storage battery 12A or the electric vehicle 13A in order to achieve the planned power. For example, the contract may be specified so that the power conditioning system 21A notifies the power conditioning system 21B of the ratio of green power to power other than green power in the transmission power. In this case, the power conditioning system 21B updates the information on the amount of stored power of the storage battery 12B for each power attribute in accordance with the notification from the power conditioning system 21A.

On the other hand, it is difficult to use the power output by the resource aggregator installation system 51C as planned power because the power supply apparatus is only the photovoltaic cell 11C.

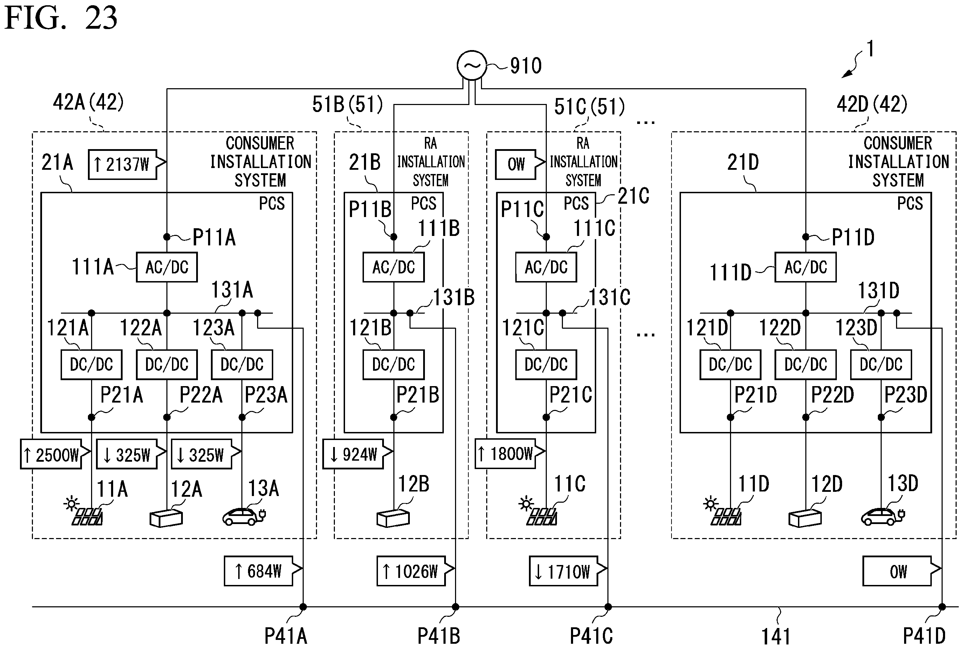

FIG. 23 is a diagram showing a fifth example of power exchange via the DC distribution network 141. FIG. 23 shows an example in which one node transmits power to a plurality of nodes via the DC distribution network 141. In the example of FIG. 23, the resource aggregator installation system 51C transmits power to the consumer installation system 42A and the resource aggregator installation system 51B via the DC distribution network 141.

Based on the contract, the resource aggregator installation system 51C transmits the power generated by the photovoltaic cell 11C to the consumer installation system 42A and the resource aggregator installation system 51B on an as-you-go basis. For example, the contract stipulates that 40% of the total power generated by the photovoltaic cell 11C is transmitted to the consumer installation system 42A and 60% is transmitted to the resource aggregator installation system 51B.

In the example of FIG. 23, the output power from the resource aggregator installation system 51C to the power system 910 is 0, and the power conditioning system 21C is outputting all the power generated by the photovoltaic cell 11C to the DC distribution network 141. The power generated by the photovoltaic cell 11C is P21C = 1800 (watts). Due to the loss in the DC/DC converter 121C, the output power from the resource aggregator installation system 51C to the DC distribution network 141 is P41C = 1710 (watts).

From the viewpoint of responsiveness of control, it is preferable that each of the consumer installation system 42A and the resource aggregator installation system 51B be capable of measuring the power (P41C) or the current at the connection point between the resource aggregator installation system 51C and the DC distribution network 141.

The consumer installation system 42A receives 40% of the measured power (P41C). That is, the power conditioning system 21A operates so that P41A = 0.4 × P41C. Within the consumer installation system 42A, the power conditioning system 21A charges, for example, the storage battery 12A and the electric vehicle 13A each by 50% of the power from the resource aggregator installation system 51C. In the example of FIG. 23, the reception power from the DC distribution network 141 of the consumer installation system 42A is P41A = 684 (watts). Due to the loss in the DC/DC converter 122A, the charging power to the storage battery 12A is P22A = 325 (watts). Further, similarly, due to the loss in the DC/DC converter 123A, the charging power to the electric vehicle 13A is also P23A = 325 (watts).

Alternatively, the consumer installation system 42A may directly consume part or all of the power from the resource aggregator installation system 51C by a power consumption apparatus such as an air conditioner in the consumer installation system 42A without temporarily storing power.

The resource aggregator installation system 51B receives 60% of the measured power (P41C). That is, the power conditioning system 21B operates so that P41B = 0.6 × P41C. In the resource aggregator installation system 51B, the power conditioning system 21B charges the storage battery 12B with the power from the resource aggregator installation system 51C.

Here, in the resource aggregator installation system 51C, it is difficult to supply the planned power (supply a constant amount of power specified in the contract in advance) because there is no power supply apparatus that can be charged and discharged. On the other hand, the consumer installation system 42A or the resource aggregator installation system 51B may receive power transmitted from the resource aggregator installation system 51C to supply the planned power.

For example, it is assumed that the contract stipulates that the consumer installation system 42A supplies 3000 watts of power (reverse power flow) to the power system 910. Further, it is assumed that the contract stipulates that the consumer installation system 42A receives the power generated by the photovoltaic cell 11C from the resource aggregator installation system 51C via the DC distribution network 141 on an as-you-go basis. The power conditioning system 21A receives power from the resource aggregator installation system 51C via the DC distribution network 141, and uses the charge/discharge power of the storage battery 12A and the electric vehicle 13A and the output power of the photovoltaic cell 11A to perform adjustment so that the output power to the power system 910 becomes P11A = 3000 watts.

For example, in the case of the reception power from the DC distribution network 141 being P41A = 2778 (watts), when converted to the output power to the power system 910, it becomes 2778 × 0.9 ≈ 2500 (watts), which is a shortage of 500 watts. In this case, the power conditioning system 21A causes, for example, the storage battery 12A to discharge. The power conditioning system 21A causes the storage battery 12A to discharge 500/(0.95 × 0.9) ≈585 (watts) so that the discharge power becomes 500 watts in terms of the output power conversion to the power system 910. As a result, the consumer installation system 42A executes the output of 3000 watts as per the contract.

When the contract content is a service contract in which the added value of green power is taken into consideration, the power conditioning system 21A causes the storage battery 12A to discharge the portion of the stored power amount of the storage battery 12A stored as green power. Specifically, the power storage information processing unit 295 of the power conditioning system 21A subtracts the power amount of the discharge due to execution of the contract from the stored power amount of green power in the record of the stored power amount of the storage battery 12A.

As a result, the consumer of the consumer installation system 42A can receive a reward considering the added value due to the green power.

A contract for transmitting power from a plurality of nodes of the power control system 1 to a plurality of nodes via the DC distribution network 141 is also conceivable. Moreover, it is conceivable for power to be transmitted from a plurality of nodes to a plurality of nodes via the DC distribution network 141 by simultaneously executing a plurality of contracts in which the nodes on the transmitting side and the nodes on the power receiving side are different.

When power is transmitted from a plurality of nodes to a plurality of nodes via the DC distribution network 141, each node on the receiving side acquires in real time the measurement value of the transmission power of the node on the transmitting side in its own contract (the power at the connection point between that node and the DC distribution network 141). Then, the node on the power receiving side receives the power transmitted in its own contract or the power obtained by subtracting the loss in the DC distribution network 141 from the power transmitted in its own contract.

If the node on the receiving side cannot acquire the measurement value of the transmission power in real time, it is conceivable to make a contract for the planned power. In this case, the node on the power receiving side receives planned power (for example, a constant value of power) predetermined in the contract.

By allowing multiple power transmissions via the DC distribution network 141 to occur on a time-division basis, only power transmission from one node to one node via the DC distribution network 141 may be performed at individual timings. In this case, each of the node on the power transmission side and the node on the power reception side measures the status (for example, potential and current) of the connection point between the node itself and the DC distribution network 141, and performs power control on the basis of the measured values. Thereby, it is possible to carry out power transfer in accordance with the plan.

Power transfer by a plan can be performed relatively easily in that each node does not require a measurement value at the connection point between the other node and the DC distribution network 141.

As described above, the apparatus control unit 292 of the power conditioning system 21 controls power transfer with the DC distribution network 141. The communication unit 210 exchanges information indicating an attribute based on the power generation scheme with respect to the power transferred to and from the DC distribution network 141.

Thereby, the power conditioning system 21 can clarify the attribute of the power transmitted through the DC distribution network 141. In particular, even in the power conditioning system 21 of the node on the power receiving side, the attribute of the reception power through the DC distribution network 141 can be clarified. By being able to clarify the attribute of power transmitted through the DC distribution network 141, the power conditioning system 21 can clarify the attribute of the power to utilize the added value arising from the attribute of the power even when the power transmitted through the DC distribution network 141 is used as power for a service directly or after being once stored in a storage battery.

Further, the classification processing unit 293 classifies and calculates, for each power supply apparatus or reception power, the details of the input/output power in a service carried out using at least one of the powers transferred with one or more power supply apparatuses and the DC distribution network 141. The service recording unit 294 records, for each classification performed by the classification processing unit 293, the details of the amount of power input/output as a result of the execution of the service.

Thereby, as in the case of the first example embodiment, even in the second example embodiment in which the DC distribution network 141 is provided, the power conditioning system 21 can show the correspondence relation of which power is provided to the service. According to the power conditioning system 21, for example, it is possible to calculate the consideration such as applying the green power tariff system to the sale of the green power generated by the photovoltaic cell 11.

Further, the classification processing unit 293 treats the DC distribution network 141 as if it were one power supply apparatus, and can calculate the details of the input/output power in the service relatively easily.

Further, the classification processing unit 293 classifies and calculates, for each service and for each power supply apparatus or reception power, the details of the input/output power in a plurality of services carried out using any one or more of the reception powers from one or more of the power supply apparatuses and the DC distribution network 141.

As a result, as in the case of the first example embodiment, even in the second example embodiment, the power conditioning system 21 can deal with implementation of a plurality of services, and can show the correspondence relation of which power is provided to which service.

Further, the classification processing unit 293, by treating the DC distribution network 141 as if it were one power supply apparatus, can calculate the details of the input/output power in the service relatively easily.

Further, the classification processing unit 293 classifies and calculates, for each service, for each power supply apparatus or transfer power, and for each attribute of power based on the power generation scheme, the input/output power for at least some of the services.

As a result, as in the case of the first example embodiment, even in the second example embodiment, the power conditioning system 21, for example, when selling power, can more reliably charge in accordance with the attribute of the power, such as calculating the charge in accordance with whether it is green power or normal power.

Further, the classification processing unit 293, by treating the DC distribution network 141 as if it were one power supply apparatus, can calculate the details of the input/output power in the service relatively easily.

Note that resource owner information such as node ID does not necessarily have to be stored in the power conditioning system. For example, in the power conditioning system, the attribute information of the green power information may be stored, and the resource owner information may not be stored.

By using the resource owner information, billing processing can be performed while performing exchange with a smart meter or the like. Therefore, for example, the terminal device of FIG. 18 may store the resource owner information and transmit the resource owner information to the host control device. When the host control device performs billing processing using the resource owner information, the exchanged power amount information and consumer information are associated with each other, and the consideration can be calculated. Alternatively, the resource owner information may be shared between the terminal devices.

Further, the classification processing unit 293 preferentially allocates to a service in which the attribute of the power is reflected as the added value a power having the attribute corresponding to the added value among the powers from power supply apparatuses, to calculate the input/output power of each classification.

As a result, as in the case of the first example embodiment, even in the second example embodiment, the service executor such as the consumer can receive the consideration (non-fossil value) reflecting the attribute of the power such as the green power on the basis of the allocation result of the classification processing unit 293.

Further, the classification processing unit 293, by treating the DC distribution network 141 as if it were one power supply apparatus, can determine the allocation of power to the service relatively easily, and calculate the details of the input/output power in the service relatively easily.

Further, the power storage information processing unit 295 calculates the stored power amount of a power supply apparatus that can store power for each attribute of the power used for charging.

As a result, in the power conditioning system 21, among the output powers from chargeable and dischargeable power supply apparatuses such as the storage battery 12 and the electric vehicle 13, it becomes possible to calculate the consideration in accordance with the attribute of the power, such as applying a green power tariff system to power in which green power is stored.

Further, the power storage information processing unit 295, by treating the DC distribution network 141 as if it were one power supply apparatus, can calculate the stored power amount of the power supply apparatus that can store power relatively easily.

Further, the classification processing unit 293 calculates the input/output power for each classification on the basis of the command value of the input/output power.

As a result, as in the case of the first example embodiment, even in the second example embodiment, the classification processing unit 293 can calculate the input/output power for each classification using the command value of the input/output power even if there is an input/output power for which the measurement value cannot be obtained.

Further, the classification processing unit 293 calculates the input/output power for each classification on the basis of the measurement value of the input/output power.

As a result, as in the case of the first example embodiment, even in the second example embodiment, even if an error arises between the command value of the input/output power and the actual input/output power, the classification processing unit 293, by using the measurement value of the input/output power, can calculate a more accurate input/output power in accordance with the actual input/output power.

Further, the apparatus control unit 292 controls the power received from the DC distribution network 141 on the basis of the measurement value of the transmission power on the transmission side to the DC distribution network 141.

As a result, the apparatus control unit 292 can control the power reception with high accuracy on the basis of the actual transmission power.

Further, the apparatus control unit 292 controls the power received from the DC distribution network 141 on the basis of the planned value of the reception power.

As a result, the apparatus control unit 292 can control the power reception even when it is impossible or difficult to measure the transmission power. Further, since the transmission time of the measured power value is not required, it is easy to secure the real-time performance of the processing of the apparatus control unit 292.

Further, the apparatus control unit 292 controls power transmission to the DC distribution network 141. The communication unit 210 transmits information indicating the attribute of the transmission power to the DC distribution network 141.

As a result, the power conditioning system 21 of the node on the power receiving side can clarify the attribute of the reception power through the DC distribution network 141. By being able to clarify the attribute of power transferred through the DC distribution network 141, the power conditioning system 21 can clarify the attribute of the power to utilize the added value arising from the attribute of the power even when the power transferred through the DC distribution network 141 is used as power for a service directly or after being once stored in a storage battery.

<Third Example Embodiment>

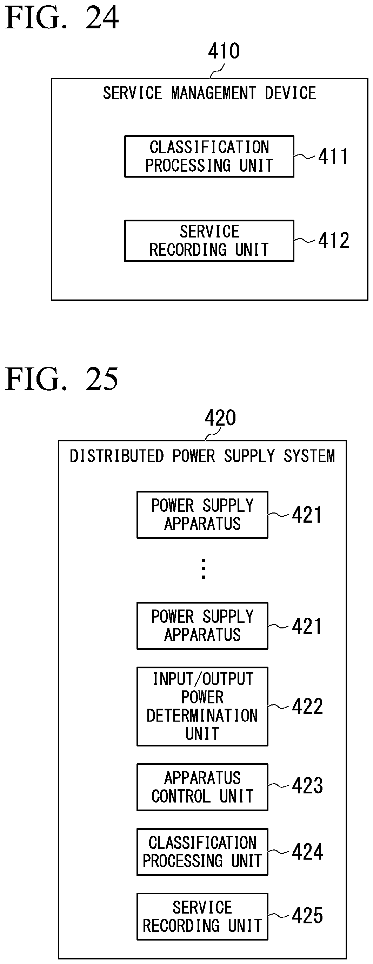

FIG. 24 is a diagram showing an example of the configuration of the service management device according to the example embodiment. A service management device 410 shown in FIG. 24 is provided with a classification processing unit 411 and a service recording unit 412.

With such a configuration, the classification processing unit 411 classifies and calculates, for each of a plurality of power supply apparatuses, the details of input/output power in a service carried out using at least one of the plurality of power supply apparatuses. The service recording unit 412 records, for each classification performed by the classification processing unit 411, the details of the amount of power input/output as a result of the execution of the service.

As a result, the service management device 410 can show the correspondence relation of which power is provided to a service. According to the service management device 410, it is possible to calculate the consideration such as applying the green power tariff system to the sale of the green power generated by the photovoltaic cell, for example.

Note that the classification processing unit 411 corresponds to an example of the classification processing means. The service recording unit 412 corresponds to an example of a service recording means.

<Fourth Example Embodiment>

FIG. 25 is a diagram showing an example of the configuration of the distributed power supply system according to the example embodiment. The distributed power supply system 420 shown in FIG. 25 is provided with a plurality of power supply apparatuses 421, an input/output power determination unit 422, an apparatus control unit 423, a classification processing unit 424, and a service recording unit 425.

With this configuration, the input/output power determination unit 422 determines the input/output power for each power supply apparatus 421 on the basis of the input/output power of a service carried out using at least one of the power supply apparatuses 421. The apparatus control unit 423 controls the power supply apparatuses 421 in accordance with the input/output power determined for each power supply apparatus 421. The classification processing unit 424 classifies and calculates, for each of the power supply apparatuses 421, the details of input/output power in the service. The service recording unit 425 records for each classification performed by the classification processing unit 424 the details of the amount of power input/output as a result of the execution of the service.

As a result, the distributed power supply system 420 can show the correspondence relation of which power is provided to a service. According to the distributed power supply system 420, it is possible to calculate the consideration such as applying the green power tariff system to the sale of the green power generated by the photovoltaic cell, for example.

Note that the input/output power determination unit 422 corresponds to an example of the input/output power determination means. The apparatus control unit 423 corresponds to an example of the apparatus control means. The classification processing unit 424 corresponds to an example of the classification processing means. The service recording unit 425 corresponds to an example of a service recording means.

<Fifth Example Embodiment>

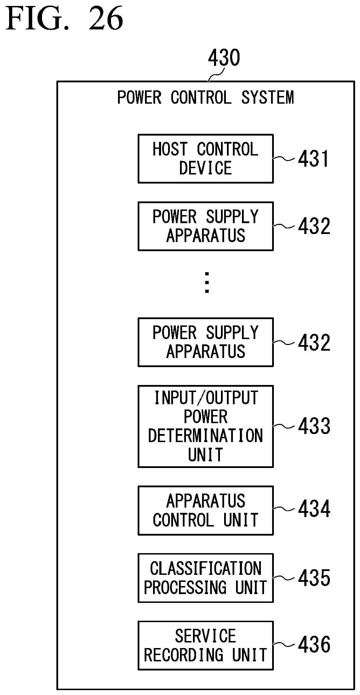

FIG. 26 is a diagram showing an example of the configuration of the power control system according to the example embodiment. The power control system 430 shown in FIG. 26 is provided with a host control device 431, a plurality of power supply apparatuses 432, an input/output power determination unit 433, an apparatus control unit 434, a classification processing unit 435, and a service recording unit 436.

With such a configuration, the host control device 431 determines the amount of input/output power required in the service. The input/output power determination unit 433 determines the input/output power for each power supply apparatus 432 on the basis of the amount of input/output power required in the service. The apparatus control unit 434 controls the power supply apparatuses 432 in accordance with the input/output power determined for each power supply apparatus 432. The classification processing unit 435 classifies and calculates, for each of the power supply apparatuses 432, the details of the input/output power in the service. The service recording unit 436 records for each classification performed by the classification processing unit 435 the details of the amount of power input/output as a result of the execution of the service.

As a result, the power control system 430 can show the correspondence relation of which power is provided to the service. According to the power control system 430, for example, it is possible to calculate the consideration such as applying the green power tariff system to the sale of the green power generated by the photovoltaic cell.

Note that the input/output power determination unit 433 corresponds to an example of the input/output power determination means. The apparatus control unit 434 corresponds to an example of the apparatus control means. The classification processing unit 435 corresponds to an example of the classification processing means. The service recording unit 436 corresponds to an example of the service recording means.

<Sixth Example Embodiment>

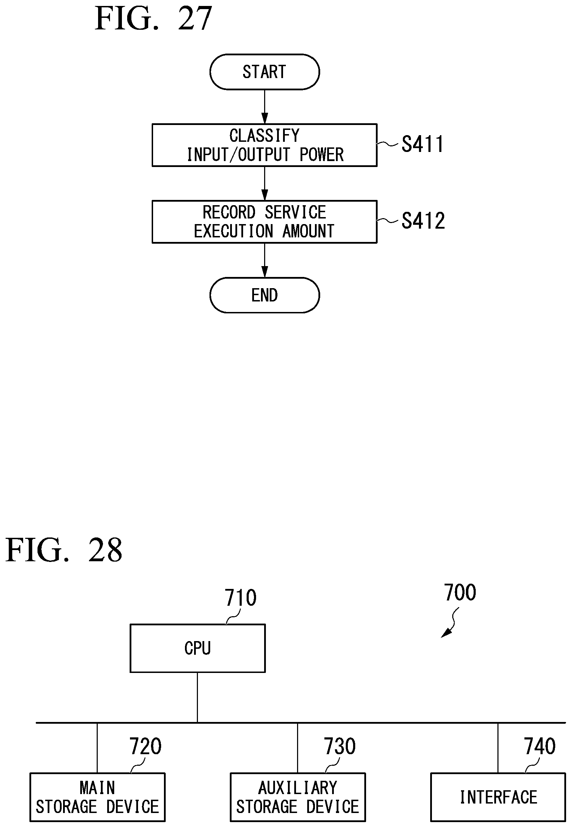

FIG. 27 is a flowchart showing an example of a processing procedure in the service management method according to the example embodiment.

The process shown in FIG. 27 includes a step of classifying and calculating, for each of a plurality of power supply apparatuses, the input/output power in a service carried out using at least one of the plurality of power supply apparatuses (Step S411), and a step of recording for each classification the details of the amount of power input/output as a result of the execution of the service (Step S412).

According to the process shown in FIG. 27, it is possible to show the correspondence relation of which power is provided to the service. According to the process shown in FIG. 27, for example, it is possible to calculate the consideration such as applying the green power tariff system to the sale of green power generated by a photovoltaic cell.

FIG. 28 is a schematic block diagram showing the configuration of a computer according to at least one example embodiment.

With the configuration shown in FIG. 28, a computer 700 is provided with a (central processing unit (CPU) 710, a main storage device 720, an auxiliary storage device 730, and an interface 740.

Any one or more of the power conditioning systems 21 and the service management device 410 described above may be implemented in the computer 700. In that case, the operation of each of the above-mentioned processing units is stored in the auxiliary storage device 730 in the form of a program. The CPU 710 reads the program from the auxiliary storage device 730, deploys the program to the main storage device 720, and executes the above processing in accordance with the program. Further, the CPU 710 secures a storage area corresponding to each of the above-mentioned storage units in the main storage device 720 in accordance with the program.

When the power conditioning system 21 is implemented in the computer 700, the operations of the control unit 290 and each unit thereof are stored in the auxiliary storage device 730 in the form of a program. The CPU 710 reads the program from the auxiliary storage device 730, deploys the program to the main storage device 720, and executes the above processing in accordance with the program.

Further, the CPU 710 secures a storage area corresponding to the storage unit 280 in the main storage device 720 in accordance with the program.

Communication by the communication unit 210 is executed by having the interface 740 have a communication function and performing communication in accordance with the control of the CPU 710.

When the service management device 410 is implemented in the computer 700, the operations of the classification processing unit 411 and the service recording unit 412 are stored in the auxiliary storage device 730 in the form of a program. The CPU 710 reads the program from the auxiliary storage device 730, deploys the program to the main storage device 720, and executes the above processing in accordance with the program.

Note that a program for realizing all or some of the functions of the power conditioning system 21 and the service management device 410 may be recorded on a computer-readable recording medium, and the program that is recorded on this recording medium may be read into a computer system and executed, thereby the processing of each unit may be performed. A "computer system" here includes an operating system (OS) and hardware such as peripheral devices.

A "computer readable recording medium" includes portable media such as flexible disks, magneto-optical disks, read only memory (ROM), and compact disc read only memory (CD-ROM), and storage devices such as hard disks built into computer systems. Further, the above program may be for realizing some of the above-mentioned functions, and may moreover be one that can realize the aforementioned functions in combination with a program already recorded in the computer system.

Hereinabove example embodiments of the present invention have been described in detail with reference to the drawings, but specific configurations are not limited to these example embodiments, and design changes and the like within a range not deviating from the gist of the present invention are also included.

Some or all of each of the above example embodiments may also be described as, but not limited to, the following supplementary notes.

(Supplementary Note 1)

A service management device provided with a classification processing means that classifies and calculates, for each of a plurality of power supply apparatuses, details of input/output power in a service carried out using at least one of the power supply apparatuses; and
a service recording means that records, for each classification performed by the classification processing means, details of an amount of power input/output as a result of execution of the service.

(Supplementary Note 2)

The service management device according to supplementary note 1, wherein the classification processing means classifies and calculates, for each service and each power supply apparatus, details of input/output power in a plurality of services carried out by using any one or more of the plurality of power supply apparatuses.

(Supplementary Note 3)

The service management device according to supplementary note 2, wherein the classification processing means classifies and calculates, for each service, each power supply apparatus, and each attribute of power based on a power generation scheme, the input/output power for at least some services.

(Supplementary Note 4)

The service management device according to supplementary note 3, wherein the classification processing means preferentially allocates a power with an attribute corresponding to added value among powers from the power supply apparatuses to the service in which the attribute is reflected as the added value, to calculate input/output power of each classification.

(Supplementary Note 5)

The service management device according to any one of supplementary notes 1 to 4, further provided with: a power storage information processing means that calculates, for each attribute of power used for charging, an amount of stored power in the power supply apparatuses capable of storing power.

(Supplementary Note 6)

The service management device according to any one of supplementary notes 1 to 5, wherein the classification processing means calculates input/output power for each classification on the basis of a command value of the input/output power.

(Supplementary Note 7)

The service management device according to any one of supplementary notes 1 to 6, wherein the classification processing means calculates input/output power for each classification on the basis of a measurement value of the input/output power.

(Supplementary Note 8)

A power conditioning system provided with the service management device according to any one of supplementary notes 1 to 7.

(Supplementary Note 9)

A distributed power supply system provided with:

a plurality of power supply apparatuses;
an input/output power determination means that determines input/output power for each of the power supply apparatuses on the basis of input/output power of a service carried out using at least one of the power supply apparatuses;
an apparatus control means that controls the power supply apparatuses in accordance with the input/output power determined for each of the power supply apparatuses;
a classification processing means that classifies and calculates, for each of the power supply apparatuses, details of the input/output power in the service; and
a service recording means that records, for each classification performed by the classification processing means, details of an amount of power input/output as a result of execution of the service.

(Supplementary Note 10)

A power control system provided with:

a host control device that determines an amount of input/output power required in a service;
a plurality of power supply apparatuses;
an input/output power determination means that determines input/output power for each of the power supply apparatuses on the basis of the amount of the input/output power required in the service;
an apparatus control means that controls the power supply apparatuses in accordance with the input/output power determined for each of the power supply apparatuses;
a classification processing means that classifies and calculates, for each of the power supply apparatuses, details of the input/output power in the service; and
a service recording means that records, for each classification performed by the classification processing means, details of an amount of power input/output as a result of execution of the service.

(Supplementary Note 11)

A service management method provided with:

classifying and calculating, for each of a plurality of power supply apparatuses, details of input/output power in a service carried out using at least one of the power supply apparatuses; and
recording, for each classification, details of an amount of power input/output as a result of execution of the service.

(Supplementary Note 12)

A recording medium that records a program for causing a computer to execute:

classifying and calculating, for each of a plurality of power supply apparatuses, details of input/output power in a service carried out using at least one of the power supply apparatuses; and
recording, for each classification, details of an amount of power input/output as a result of execution of the service.

This application is based upon and claims the benefit of priority from Japanese Patent Application No. 2019-231731, filed December 23, 2019, the disclosure of which is incorporated herein in its entirety by reference.

INDUSTRIAL APPLICABILITY

The present invention can be applied to, for example, services related to power supply and demand. According to the present invention, it is possible to show the correspondence relation of which power is provided to a service using which power supply apparatus.

Description of Reference Signs

| | |
|---|---|
| 1, 430 | Power control system |
| 11 | Photovoltaic cell |
| 12 | Storage battery |
| 13 | Electric vehicle |
| 21 | Power conditioning system |
| 22 | Terminal device |
| 31, 431 | Host control device |
| 41, 420 | Distributed power supply system |
| 42 | Consumer installation system |
| 111 | AC/DC converter |
| 121 | First DC/DC converter |
| 122 | Second DC/DC converter |
| 123 | Third DC/DC converter |
| 131 | DC bus |
| 210 | Communication unit |
| 220 | Power conversion unit |
| 280 | Storage unit |
| 290 | Control unit |
| 291, 422, | 433 Input/output power determination unit |
| 292, 423, | 434 Apparatus control unit |
| 293, 411, 424, 435 | Classification processing unit |
| 294, 412, 425, 436 | Service recording unit |
| 295 | Power storage information processing unit |
| 410 | Service management device |
| 421,432 | Power supply apparatus |

**Claims**

1. A service management device comprising:

   a classification processing means that classifies and calculates, for each of a plurality of power supply apparatuses, details of input/output power in a service carried out using at least one of the power supply apparatuses; and a service recording means that records, for each classification performed by the classification processing means, details of an amount of power input/output as a result of execution of the service.

2. The service management device according to claim 1, wherein the classification processing means classifies and calculates, for each service and each power supply apparatus, details of input/output power in a plurality of services carried out by using any one or more of the plurality of power supply apparatuses.

3. The service management device according to claim 2, wherein the classification processing means classifies and calculates, for each service, each power supply apparatus, and each attribute of power based on a power generation scheme, the input/output power for at least some services.

4. The service management device according to claim 3, wherein the classification processing means preferentially allocates a power with an attribute corresponding to added value among powers from the power supply apparatuses to the service in which the attribute is reflected as the added value, to calculate input/output power of each classification.

5. The service management device according to any one of claims 1 to 4, further comprising:
   a power storage information processing means that calculates, for each attribute of power used for charging, an amount of stored power in the power supply apparatuses capable of storing power.

6. The service management device according to any one of claims 1 to 5, wherein the classification processing means calculates input/output power for each classification on the basis of a command value of the input/output power.

7. The service management device according to any one of claims 1 to 6, wherein the classification processing means calculates input/output power for each classification on the basis of a measurement value of the input/output power.

8. A power conditioning system comprising the service management device according to any one of claims 1 to 7.

9. A distributed power supply system comprising:

   a plurality of power supply apparatuses;
   an input/output power determination means that determines input/output power for each of the power supply apparatuses on the basis of input/output power of a service carried out using at least one of the power supply apparatuses;
   an apparatus control means that controls the power supply apparatuses in accordance with the input/output power determined for each of the power supply apparatuses;
   a classification processing means that classifies and calculates, for each of the power supply apparatuses, details of the input/output power in the service; and
   a service recording means that records, for each classification performed by the classification processing means, details of an amount of power input/output as a result of execution of the service.

10. A power control system comprising:

    a host control device that determines an amount of input/output power required in a service;
    a plurality of power supply apparatuses;
    an input/output power determination means that determines input/output power for each of the power supply apparatuses on the basis of the amount of the input/output power required in the service;
    an apparatus control means that controls the power supply apparatuses in accordance with the input/output power determined for each of the power supply apparatuses;
    a classification processing means that classifies and calculates, for each of the power supply apparatuses, details of the input/output power in the service; and
    a service recording means that records, for each classification performed by the classification processing means, details of an amount of power input/output as a result of execution of the service.

11. A service management method comprising:

classifying and calculating, for each of a plurality of power supply apparatuses, details of input/output power in a service carried out using at least one of the power supply apparatuses; and
recording, for each classification, details of an amount of power input/output as a result of execution of the service.

12. A recording medium that records a program for causing a computer to execute:

classifying and calculating, for each of a plurality of power supply apparatuses, details of input/output power in a service carried out using at least one of the power supply apparatuses; and
recording, for each classification, details of an amount of power input/output as a result of execution of the service.

# FIG. 1

RESOURCE AGGREGATOR

HOST CONTROL DEVICE — 31

1

42
CONSUMER INSTALLATION SYSTEM

42
CONSUMER INSTALLATION SYSTEM

...

42
CONSUMER INSTALLATION SYSTEM

TERMINAL DEVICE — 22

41
DISTRIBUTED POWER SUPPLY SYSTEM

POWER CONDITIONING SYSTEM — 21

PHOTOVOLTAIC CELL — 11

STORAGE BATTERY — 12

ELECTRIC VEHICLE — 13

FIG. 2

910

21

POWER CONDITIONING SYSTEM

P11 111

AC/DC CONVERTER

131

P31 121 (120)   P32 122 (120)   P33 123 (120)

FIRST DC/DC CONVERTER    SECOND DC/DC CONVERTER    THIRD DC/DC CONVERTER

P21    P22    P23

11    12    13

PHOTOVOLTAIC CELL    STORAGE BATTERY    ELECTRIC VEHICLE

# FIG. 3

POWER CONDITIONING SYSTEM — 21

STORAGE UNIT — 280

CONTROL UNIT — 290

INPUT/OUTPUT POWER DETERMINATION UNIT — 291

APPARATUS CONTROL UNIT — 292

CLASSIFICATION PROCESSING UNIT — 293

SERVICE RECORDING UNIT — 294

POWER STORAGE INFORMATION PROCESSING UNIT — 295

POWER CONVERSION UNIT — 220

COMMUNICATION UNIT — 210

# FIG. 4

POWER CONDITIONING SYSTEM  21

CONSUMER-ORIENTED SERVICE

311 CONSUMER-ORIENTED INPUT/OUTPUT POWER CALCULATING UNIT

CONSUMER-ORIENTED SERVICE INPUT/OUTPUT POWER CALCULATION VALUE(NO UPPER LIMIT)

312 CONSUMER-ORIENTED SERVICE INPUT/OUTPUT POWER CALCULATION VALUE

333

332

AC TOTAL INPUT/OUTPUT POWER CALCULATION VALUE

341 CONSUMER-ORIENTED POWER AMOUNT ACCUMULATING UNIT

SYSTEM-ORIENTED SECOND SERVICE  331

343 SYSTEM-ORIENTED SECOND SERVICE POWER AMOUNT ACCUMULATING UNIT

SYSTEM-ORIENTED FIRST SERVICE

321 FREQUENCY DEVIATION CALCULATING UNIT

FREQUENCY DEVIATION

322 ΔF CONTROL INPUT/OUTPUT POWER CONTROL AMOUNT CALCULATING UNIT

ΔF CONTROL INPUT/OUTPUT POWER(SYSTEM-ORIENTED FIRST SERVICE INPUT/OUTPUT POWER CALCULATION VALUE)

342 ΔF CONTROL POWER AMOUNT ACCUMULATING UNIT

TERMINAL DEVICE

CONSUMER-ORIENTED SERVICE UPPER LIMIT POWER VALUE

SYSTEM-ORIENTED SECOND SERVICE INPUT/OUTPUT POWER CALCULATION VALUE

ΔF CONTROL PARAMETER VALUE

SERVICE MODE SETTING INFORMATION

EP 4 084 279 A1

# FIG. 5

~910

POWER SALE
↑450W

ANCILLARY
↑270W

21

POWER CONDITIONING
SYSTEM

P11~• 111

AC/DC
CONVERTER

P31~• 121

FIRST DC/DC
CONVERTER

↑~P21

P32~• 122

SECOND DC/DC
CONVERTER

•~P22

P33~• 123

THIRD DC/DC
CONVERTER

•~P23

↑500W

↑100W

↑200W

11

PHOTOVOLTAIC
CELL

12

STORAGE
BATTERY

13

ELECTRIC
VEHICLE

FIG. 6

FIG. 7

~910

POWER SALE
↑1000W

ANCILLARY
↓100W

21

POWER CONDITIONING
SYSTEM

P11~ 111

AC/DC
CONVERTER

P31~ 121

FIRST DC/DC
CONVERTER

P32~ 122

SECOND DC/DC
CONVERTER

P33~ 123

THIRD DC/DC
CONVERTER

●~P21

●~P22

●~P23

↑2000W

↓500W

↓500W

11

PHOTOVOLTAIC
CELL

12

STORAGE
BATTERY

13

ELECTRIC
VEHICLE

FIG. 8

FIG. 9

POWER CONDITIONING SYSTEM

↓400W

21

P11 · 111

AC/DC CONVERTER

P31 · 121          P32 · 122          P33 · 123

FIRST DC/DC CONVERTER    SECOND DC/DC CONVERTER    THIRD DC/DC CONVERTER

P21                P22                P23

↑300W              ↓750W              ↑100W

11                 12                 13

PHOTOVOLTAIC CELL    STORAGE BATTERY    ELECTRIC VEHICLE

910

# FIG. 10

```
                    ┌─────────────┐
                    │   START     │
                    └─────────────┘
                           │
                           ▼
          ┌───────────────────────────┐
          │  ACQUIRE INPUT/OUTPUT      │
          │  POWER COMMAND VALUE       │~S11
          │  FOR EACH SERVICE          │
          └───────────────────────────┘
                           │
                           ▼
          ┌───────────────────────────┐
          │  CALCULATE TOTAL           │~S12
          │  POWER COMMAND VALUE       │
          └───────────────────────────┘
                           │
                           ▼
          ┌───────────────────────────┐
          │  DETERMINE ALLOCATION      │~S13
          │  TO EACH APPARATUS         │
          └───────────────────────────┘
                           │
                           ▼
          ┌───────────────────────────┐
          │  CONTROL                   │~S14
          │  EACH APPARATUS            │
          └───────────────────────────┘
                           │
                           ▼
          ┌───────────────────────────┐
          │  CALCULATE                 │
          │  DETAILS OF SERVICE        │~S15
          │  EXECUTION AMOUNT          │
          └───────────────────────────┘
                           │
                           ▼
          ┌───────────────────────────┐
          │  RECORD                    │
          │  DETAILS OF SERVICE        │~S16
          │  EXECUTION AMOUNT          │
          └───────────────────────────┘
                           │
                           ▼
          ┌───────────────────────────┐
          │  CALCULATE AND RECORD      │
          │  DETAILS OF STORED POWER   │~S17
          │  AMOUNT IN EACH APPARATUS  │
          └───────────────────────────┘
                           │
                           ▼
                    ┌─────────────┐
                    │    END      │
                    └─────────────┘
```

FIG. 11

```
        ┌──────────┐
        │  START   │
        └────┬─────┘
             │
─────────────┼─────────────────────────────────
             │
      ┌──────┴──────┐              ┌──────────────┐
      ▼             │              ▼
┌──────────────────────┐    ┌──────────────────────┐
│  ACQUIRE INPUT/OUTPUT │    │  ACQUIRE INPUT/OUTPUT │
│ POWER CALCULATION VALUE│ ~S111  │POWER MEASUREMENT VALUE│ ~S112
│   FOR EACH SERVICE    │    │   FOR EACH APPARATUS  │
└──────────┬───────────┘    └──────────┬───────────┘
           │                           │
───────────┼───────────────────────────┼────────
           │                           │
           └───────────┬───────────────┘
                       ▼
           ┌──────────────────────┐
           │  ALLOCATE INPUT/OUTPUT │
           │    POWER FOR EACH     │ ~S113
           │  APPARATUS TO SERVICE │
           └──────────┬───────────┘
                      ▼
           ┌──────────────────────┐
           │ CONVERT TO INPUT/OUTPUT│
           │POWER AMOUNT AND CLASSIFY│ ~S114
           └──────────┬───────────┘
                      ▼
              ┌──────────┐
              │   END    │
              └──────────┘
```

# FIG. 12

# FIG. 13

≦0
(INPUT: FORWARD
POWER FLOW)

S211

××
INPUT/OUTPUT POWER
CALCULATION VALUE

>0
(OUTPUT: REVERSE
POWER FLOW)

≦0
(INPUT)

S212

TOTAL
INPUT/OUTPUT POWER
CALCULATION VALUE

>0
(OUTPUT)

≦0
(INPUT)

S213

TOTAL
INPUT/OUTPUT POWER
CALCULATION VALUE

>0
(OUTPUT)

S221

ACQUIRE INPUT/OUTPUT POWER
AMOUNT FOR EACH APPARATUS
AND EACH ATTRIBUTE, AND
ACCUMULATE IN ×× INPUT
POWER AMOUNT CUMULATIVE
VALUE(DURING INPUT) FOR EACH
APPARATUS AND EACH ATTRIBUTE

S222

ACQUIRE INPUT/OUTPUT POWER
AMOUNT FOR EACH APPARATUS
AND EACH ATTRIBUTE, AND
ACCUMULATE IN ×× INPUT
POWER AMOUNT CUMULATIVE
VALUE(DURING OUTPUT) FOR EACH
APPARATUS AND EACH ATTRIBUTE

S223

ACQUIRE INPUT/OUTPUT POWER
AMOUNT FOR EACH APPARATUS
AND EACH ATTRIBUTE, AND
ACCUMULATE IN ×× OUTPUT
POWER AMOUNT CUMULATIVE
VALUE(DURING INPUT) FOR EACH
APPARATUS AND EACH ATTRIBUTE

S224

ACQUIRE INPUT/OUTPUT POWER
AMOUNT FOR EACH APPARATUS
AND EACH ATTRIBUTE, AND
ACCUMULATE IN ×× OUTPUT
POWER AMOUNT CUMULATIVE
VALUE(DURING OUTPUT) FOR EACH
APPARATUS AND EACH ATTRIBUTE

# FIG. 14

```
        START
          │
          ▼
┌─────────────────────┐
│  ACQUIRE DETAILS OF  │
│  INPUT/OUTPUT POWER  │ ～S311
└─────────────────────┘
          │
          ▼
┌─────────────────────┐
│  CONVERT INPUT/OUTPUT│
│ POWER TO POWER AMOUNT│ ～S312
└─────────────────────┘
          │
          ▼
┌─────────────────────┐
│   UPDATE RECORD OF   │
│  STORED POWER AMOUNT │ ～S313
│  FOR EACH APPARATUS  │
│  AND EACH ATTRIBUTE  │
└─────────────────────┘
          │
          ▼
         END
```

FIG. 15

FIG. 16

# FIG. 17

EP 4 084 279 A1

# FIG. 18

# FIG. 19

EP 4 084 279 A1

FIG. 20

FIG. 21

EP 4 084 279 A1

# FIG. 22

# FIG. 23

# FIG. 24

410

SERVICE MANAGEMENT DEVICE

CLASSIFICATION PROCESSING UNIT — 411

SERVICE RECORDING UNIT — 412

# FIG. 25

420

DISTRIBUTED POWER SUPPLY SYSTEM

POWER SUPPLY APPARATUS — 421

⋮

POWER SUPPLY APPARATUS — 421

INPUT/OUTPUT POWER DETERMINATION UNIT — 422

APPARATUS CONTROL UNIT — 423

CLASSIFICATION PROCESSING UNIT — 424

SERVICE RECORDING UNIT — 425

FIG. 26

430

POWER CONTROL SYSTEM

HOST CONTROL
DEVICE — 431

POWER SUPPLY
APPARATUS — 432

⋮

POWER SUPPLY
APPARATUS — 432

INPUT/OUTPUT
POWER
DETERMINATION
UNIT — 433

APPARATUS
CONTROL UNIT — 434

CLASSIFICATION
PROCESSING UNIT — 435

SERVICE
RECORDING UNIT — 436

# FIG. 27

```
        ( START )
            │
            ▼
┌─────────────────────┐
│      CLASSIFY       │ ～S411
│  INPUT/OUTPUT POWER │
└─────────────────────┘
            │
            ▼
┌─────────────────────┐
│   RECORD SERVICE    │ ～S412
│  EXECUTION AMOUNT   │
└─────────────────────┘
            │
            ▼
        ( END )
```

# FIG. 28

```
                                                      700
                  710                                  ↙
           ┌──────────────┐
           │     CPU      │
           └──────────────┘
                  │
     ┌────────────┼──────────────────────────┐
   720           730                        740
┌──────────┐  ┌──────────────┐      ┌──────────────┐
│   MAIN   │  │  AUXILIARY   │      │  INTERFACE   │
│ STORAGE  │  │   STORAGE    │      │              │
│  DEVICE  │  │   DEVICE     │      │              │
└──────────┘  └──────────────┘      └──────────────┘
```

<div align="center">

**INTERNATIONAL SEARCH REPORT**

</div>

| | International application No. |
|---|---|
| | PCT/JP2020/045467 |

**A. CLASSIFICATION OF SUBJECT MATTER**
Int.Cl. H02J13/00(2006.01)i, H02J7/35(2006.01)i, H02J3/32(2006.01)i,
H02J3/38(2006.01)i, H02J3/46(2006.01)i
FI: H02J3/46, H02J3/38130, H02J3/38110, H02J3/32, H02J13/00301A, H02J7/35K
According to International Patent Classification (IPC) or to both national classification and IPC

**B. FIELDS SEARCHED**

Minimum documentation searched (classification system followed by classification symbols)
Int.Cl. H02J13/00, H02J7/35, H02J3/32, H02J3/38, H02J3/46

Documentation searched other than minimum documentation to the extent that such documents are included in the fields searched
    Published examined utility model applications of Japan    1922-1996
    Published unexamined utility model applications of Japan    1971-2020
    Registered utility model specifications of Japan    1996-2020
    Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2011-176948 A (PANASONIC CORPORATION) 08 September 2011 (2011-09-08), paragraphs [0042]-[0098], fig. 1-7 | 1, 11-12<br>8<br>2-7, 9-10 |
| Y | JP 2018-078669 A (PANASONIC INTELLECTUAL PROPERTY MANAGEMENT CO., LTD.) 17 May 2018 (2018-05-17), paragraphs [0016]-[0025], fig. 1 | 8 |

☐  Further documents are listed in the continuation of Box C.    ☒  See patent family annex.

| | |
|---|---|
| \*    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 23 December 2020 | 19 January 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT
Information on patent family members

International application No.

PCT/JP2020/045467

JP 2011-176948 A    08 September 2011    (Family: none)

JP 2018-078669 A    17 May 2018          (Family: none)

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014236600 A

- JP 2019231731 A